# EUROPEAN PATENT APPLICATION

(11) **EP 4 561 218 A1**
(43) Date of publication of application: **28.05.2025**
(21) Application number: 22951463.3
(22) Date of filing: 19.07.2022
(51) Int. Cl.: H04W 72/04

(54) **PHYSICAL UPLINK SHARED CHANNEL (PUSCH) TRANSMISSION METHOD AND APPARATUS**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/106582
(87) International publication number: WO 2024/016185

(57) **Abstract**

Embodiments of the present application disclose a physical uplink shared channel (PUSCH) transmission method and an apparatus, which can be applied to the technical field of communications. A method executed by a terminal device comprises: determining transmission configurations of a plurality of PUSCHs comprising a configured grant (CG)-PUSCH for simultaneous uplink transmission across multiple antenna panels, and control resource pool indexes respectively associated with different PUSCHs according to configuration/scheduling information, wherein different control resource pool indexes are respectively associated with different transmission reception points (TRPs), and different TRPs respectively correspond to different antenna panels of the terminal device; and simultaneously transmitting the plurality of PUSCHs by means of the panels corresponding to the TRPs associated with the transmission configurations of the plurality of PUSCHs. Thus, PUSCHs can be simultaneously transmitted to a plurality of TRP directions of a network side device by means of a plurality or antenna panels or a terminal device, thereby implementing simultaneous collaborative transmission, improving the transmission reliability and throughput, and reducing transmission time delays under a plurality of TRPs.

## Description

### TECHNICAL FIELD

The disclosure relates to a field of communication technologies, and particularly to a method and an apparatus for transmitting a physical uplink shared channel (PUSCH).

### BACKGROUND

In the related art, a terminal transmits a physical uplink shared channel (PUSCH) towards multiple transmission reception points (TRPs) in a network side device. Same information in the PUSCH is transmitted to different TRPs in the network side device by different transmission occasions (TOs) of a time domain in a time-division method, realizing a repetition transmission.

However, with the above way, a transmission delay is relatively large, which is a problem needed to be solved.

### SUMMARY

Embodiments of the disclosure provide a method and an apparatus for a physical uplink shared channel (PUSCH), such that the PUSCH transmission is transmitted simultaneously to directions of multiple transmission reception points (TRPs) of a network side device by multiple antenna panels of a terminal, thus realizing the simultaneous coordinated transmission, increasing the reliability and the throughput rate of the transmission, and reducing the transmission delay under the multiple TRPs.

In a first aspect, an embodiment of the disclosure provides a method for transmitting a PUSCH, performed by a terminal. The method includes: determining multiple PUSCH configurations including a configured grant-PUSCH (CG-PUSCH) and configured for simultaneous uplink transmission on multiple antenna panels, and control resource set (CORESET) pool indexes respectively associated with different PUSCH configurations, in which different CORESET pool indexes are respectively associated with different transmission reception points (TRPs), and different TRPs respectively correspond to different antenna panels of the terminal; and transmitting the PUSCH simultaneously by the antenna panels corresponding to the TRPs associated with the multiple PUSCH configurations.

In the technical solution, the terminal determines the multiple PUSCH configurations including the CG-PUSCH and configured for simultaneous uplink transmission on the multiple antenna panels, and the CORESET pool indexes respectively associated with the multiple PUSCH configurations, in which different CORESET pool indexes are respectively associated with different TRPs, and different TRPs respectively correspond to different antenna panels of the terminal; and transmits the PUSCH simultaneously by the antenna panels corresponding to the TRPs associated with the multiple PUSCH configurations. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay under the multiple TRPs.

In a second aspect, an embodiment of the disclosure provides a method for transmitting a PUSCH, performed by a network side device. The method includes: receiving a PUSCH transmitted simultaneously from a terminal by antenna panels corresponding to TRPs associated with multiple PUSCH configurations, in which the PUSCH is sent by the terminal in the case that the terminal determines the multiple PUSCH configurations including a CG-PUSCH and configured for simultaneous uplink transmission on multiple antenna panels and CORESET pool indexes respectively associated with the multiple PUSCH configurations. Different CORESET pool indexes are respectively associated with different TRPs, and different TRPs respectively correspond to different antenna panels of the terminal.

In a third aspect, an embodiment of the disclosure provides a communication device. The communication device has some or all of functions of the terminal in the method described in the first aspect, for example, the communication device may have functions of some or all of embodiments of the disclosure, or may have a function of independently implementing any embodiment of the disclosure. The functions may be realized by hardware, or by the hardware executing corresponding software. The hardware or software includes one or more units or modules corresponding to the above functions.

In an implementation, a structure of the communication device may include a transceiver module and a processing module. The processing module is configured to support the communication device to execute the corresponding functions of the method described above. The transceiver module is configured to support communication between the communication device and other devices. The communication device may further include a storage module. The storage module is configured to couple with the transceiver module and the processing module, and store necessary computer programs and data of the communication device.

In an implementation, the communication device includes: a processing module, configured to determine multiple PUSCH configurations including a CG-PUSCH and configured for simultaneous uplink transmission on multiple antenna panels, and CORESET pool indexes respectively associated with different PUSCH configurations, in which different CORESET pool indexes are respectively associated with different TRPs, and different TRPs respectively correspond to different antenna panels of the terminal; and a transceiver module, configured to transmit the PUSCH simultaneously by the antenna panels corresponding to the TRPs associated with the multiple PUSCH configurations.

In a fourth aspect, an embodiment of the disclosure provides another communication device. The communication device has some or all of functions of the terminal in the method described in the second aspect, for example, the communication device may have functions of some or all of embodiments of the disclosure, or may have a function of independently implementing any embodiment of the disclosure. The functions may be realized by hardware, or by the hardware executing corresponding software. The hardware or software includes one or more units or modules corresponding to the above functions.

In an implementation, a structure of the communication device may include a transceiver module and a processing module. The processing module is configured to support the communication device to execute the corresponding functions of the method described above. The transceiver module is configured to support communication between the communication device and other devices. The communication device may further include a storage module. The storage module is configured to couple with the transceiver module and the processing module, and store necessary computer programs and data of the communication device.

In an implementation, the communication device includes: a transceiver module, configured to receive a PUSCH transmitted simultaneously from a terminal by antenna panels corresponding to TRPs associated with multiple PUSCH configurations, in which the PUSCH is sent by the terminal in the case that the terminal determines the multiple PUSCH configurations including a CG-PUSCH and configured for simultaneous uplink transmission on multiple antenna panels, and CORESET pool indexes respectively associated with different PUSCH configurations. Different CORESET pool indexes are respectively associated with different TRPs, and different TRPs respectively correspond to different panels of the terminal.

In a fifth aspect, an embodiment of the disclosure provides a communication device. The communication device includes a processor. When the processor calls a computer program stored in a memory, the method described in the first aspect above is executed.

In a sixth aspect, an embodiment of the disclosure provides a communication device. The communication device includes: a processor. When the processor calls a computer program stored in a memory, the method described in the second aspect above is executed.

In a seventh aspect, an embodiment of the disclosure provides a communication device. The communication device includes: a processor and a memory for storing a computer program. The processor is configured to execute the computer program to cause the communication device to execute the method described in the first aspect above.

In an eighth aspect, an embodiment of the disclosure provides a communication device. The communication device includes: a processor and a memory for storing a computer program. The processor is configured to execute the computer program to cause the communication device to execute the method described in the second aspect above.

In a ninth aspect, an embodiment of the disclosure provides a communication device. The communication device includes: a processor and an interface circuit. The interface circuit is configured to receive code instructions and transmit the code instructions to the processor. The processor is configured to run the code instructions, to cause the communication device to execute the method described in the first aspect above.

In a tenth aspect, an embodiment of the disclosure provides a communication device. The communication device includes: a processor and an interface circuit. The interface circuit is configured to receive code instructions and transmit the code instructions to the processor. The processor is configured to run the code instructions, to cause the communication device to execute the method described in the second aspect above.

In an eleventh aspect, an embodiment of the disclosure provides a system for configuring a PUSCH. The system includes: the communication device in the third aspect and the communication device in the fourth aspect; or the system includes the communication device in the fifth aspect and the communication device in the sixth aspect; or the system includes the communication device in the seventh aspect and the communication device in the eighth aspect; or the system includes the communication device in the ninth aspect and the communication device in the tenth aspect.

In a twelfth aspect, an embodiment of the disclosure provides a computer-readable storage medium, configured to store instructions employed by the terminal. When the instructions are executed, the terminal is caused to execute the method in the first aspect above.

In a thirteenth aspect, an embodiment of the disclosure provides a computer-readable storage medium, configured to store instructions employed by the network side device. When the instructions are executed, the network side device is caused to execute the method in the second aspect above.

In a fourteenth aspect, the disclosure further provides a computer program product including a computer program. When the computer program is run by a computer, the computer is caused to execute the method in the first aspect above.

In a fifteenth aspect, the disclosure further provides a computer program product including a computer program. When the computer program is run by a computer, the computer is caused to execute the method in the second aspect above.

In a sixteenth aspect, the disclosure provides a chip system. The chip system includes at least one processor and an interface, for supporting the terminal to realize the functions involved in the first aspect, e.g., determining or processing at least one of data and information involved in the method described above. In a possible design, the chip system further includes a memory. The memory is configured to store necessary computer programs and data for the terminal. The chip system may be combined by chips or may include chips and other discrete devices.

In a seventeenth aspect, the disclosure provides a chip system. The chip system includes at least one processor and an interface, for supporting the network side device to realize the functions involved in the second aspect, e.g., determining or processing at least one of data and information involved in the method described above. In a possible design, the chip system further includes a memory. The memory is configured to store necessary computer programs and data for the terminal. The chip system may be combined by chips or may include chips and other discrete devices.

In an eighteenth aspect, the disclosure provides a computer program. When the computer program is run by a computer, the computer is caused to execute the method in the first aspect above.

In a nineteenth aspect, the disclosure provides a computer program. When the computer program is run by a computer, the computer is caused to execute the method in the second aspect above.

### BRIEF DESCRIPTION OF THE DRAWINGS

To more clearly illustrate the technical solution in embodiments of the disclosure or in the related art, description is made below to accompanying drawings required in the description in embodiments of the disclosure or in the related art.
FIG. 1 is a block diagram illustrating a communication system according to an embodiment of the disclosure.
FIG. 2 is a schematic diagram illustrating transmission of multiple panels/transmission reception points (TRPs) scheduled by single downlink control information (DCI) according to an embodiment of the disclosure.
FIG. 3 is a schematic diagram illustrating transmission of multiple panels/TRPs scheduled by multiple DCI according to an embodiment of the disclosure.
FIG. 4 is a flow chart illustrating a method for transmitting a physical uplink shared channel (PUSCH) according to an embodiment of the disclosure.
FIG. 5 is a flow chart illustrating a method for transmitting a PUSCH according to another embodiment of the disclosure.
FIG. 6 is a flow chart illustrating a method for transmitting a PUSCH according to a still another embodiment of the disclosure.
FIG. 7 is a flow chart illustrating a method for transmitting a PUSCH according to a still another embodiment of the disclosure.
FIG. 8 is a flow chart illustrating a method for transmitting a PUSCH according to a still another embodiment of the disclosure.
FIG. 9 is a flow chart illustrating a method for transmitting a PUSCH according to a still another embodiment of the disclosure.
FIG. 10 is a flow chart illustrating a method for transmitting a PUSCH according to a still another embodiment of the disclosure.
FIG. 11 is a flow chart illustrating a method for transmitting a PUSCH according to a still another embodiment of the disclosure.
FIG. 12 is a flow chart illustrating a method for transmitting a PUSCH according to a still another embodiment of the disclosure.
FIG. 13 is a flow chart illustrating a method for transmitting a PUSCH according to a still another embodiment of the disclosure.
FIG. 14 is a flow chart illustrating a method for transmitting a PUSCH according to a still another embodiment of the disclosure.
FIG. 15 is a flow chart illustrating a method for transmitting a PUSCH according to a still another embodiment of the disclosure.
FIG. 16 is a flow chart illustrating a method for transmitting a PUSCH according to a still another embodiment of the disclosure.
FIG. 17 is a flow chart illustrating a method for transmitting a PUSCH according to a still another embodiment of the disclosure.
FIG. 18 is a flow chart illustrating a method for transmitting a PUSCH according to a still another embodiment of the disclosure.
FIG. 19 is a flow chart illustrating a method for transmitting a PUSCH according to a still another embodiment of the disclosure.
FIG. 20 is a block diagram illustrating a communication device according to an embodiment of the disclosure.
FIG. 21 is a block diagram illustrating a communication device according to another embodiment of the disclosure.
FIG. 22 is a block diagram illustrating a chip according to an embodiment of the disclosure.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects of the disclosure as recited in the appended claims.

It can be understood that the term "a plurality of" in the disclosure refers to two or more, and other quantifiers are similar. The term "and/or", which describes a relationship of related objects, means that there may be three kinds of relationships. For example, A and/or B can represent that A exists alone, A and B exist together, and B exists alone. The character "/" generally represents that context objects are in an OR relationship. The singular forms "a", "an" and "the" are also intended to include the plural forms, unless the context clearly indicates other meaning.

It may be further understood that, although the operations are described in a specific order in the accompanying drawings in embodiments of the disclosure, it should not be understood that these operations are required to be performed in the specific order or serial order illustrated, or all the operations illustrated are required to be performed to obtain a desired result. In a specific circumstance, multitasking and parallel processing may be beneficial.

For ease of understanding a technical solution of the disclosure, some of the terms involved in embodiments of the disclosure are briefly described below.

### 1. Transmission of multiple transmission reception points (TRPs).

In order to improve coverage at a cell edge and provide a more balanced service quality within a serving cell, multi-point coordination is still an important technological approach in a new radio (NR) system. From a perspective of network morphology, network deployment with a large number of distributed access points plus a baseband centralized processing is more beneficial to provide a balanced user experience, and significantly reduces a delay and a signaling overhead caused by a handover across cells. As a frequency band increases, from a perspective of ensuring a network coverage, a relatively dense deployment of access points is also required. At a high frequency band, with improvement of integration of an active antenna device, a modularized active antenna array may be advantageous. An antenna array of each TRP may be divided into several relatively independent antenna panels, thus a form of an entire array and the number of ports may be flexibly adjusted based on a deployment scenario and a service requirement. The antenna panels or the TRPs may also be connected via an optical fiber, to perform a more flexible distributed deployment. In a millimeter wave band, with the decrease of a wavelength, a blocking effect caused by an obstacle such as a human body or a vehicle becomes more significant. In this case, from a perspective of ensuring a robustness of a link connection, coordination between the multiple TRPs (MTRP) or multiple panels may also be employed to perform transmission/reception from multiple beams in multiple angles, thus reducing an adverse influence of the blocking effect.

Based on a mapping relationship between a transmitted signal flow and the multiple TRPs/panels, a coordinated multiple point transmission (CoMP) technology may be categorized into coherent transmission and non-coherent transmission. In the coherent transmission, each data layer is mapped to the multiple TRPs/panels by a weighted vector. In the non-coherent transmission, each data stream is merely mapped in some of the multiple TRPs/panels. The coherent transmission has a high requirement for synchronization between transmission points and for a transmission capacity of a backhaul link, which is more sensitive to multiple non-ideal factors in a practical deployment condition. In contrast, the non-coherent transmission is less affected by these factors, which is a key consideration for the multiple point transmission technology.

It should be noted that, in an NR Rel-15, the research and standardization related to the MTRP has not been fully developed. The release 16 (R16) mainly focuses on the standardization of a physical downlink shared channel (PDSCH) channel. The release 17 (R17) performs enhancement on the standardization of the MTRP for a physical uplink shared channel(PUSCH)/physical uplink control channel(PUCCH), but merely standardizing a time-division multiplexing (TDM) transmission solution. For the PUSCH/PUCCH, there needs to consider simultaneous transmission enhancement for the terminal based on the multiple panels related to the MTRP.

### 2. Quasi-collocation (QCL).

The QCL refers to a situation where a channel large-scale parameter of a channel experienced by a symbol on a certain antenna port may be inferred from a channel experienced by a symbol on another antenna port. The channel large-scale parameter may include a delay spread, an average delay, a Doppler spread, a Doppler offset, an average gain, a spatial reception parameter, etc.

A concept of the QCL is introduced with the appearance of the CoMP technology. Multiple sites involved in a CoMP transmission may correspond to sites in different geographical locations or multiple sectors with different antenna panel orientations. For example, when a terminal receives data from different sites, a spatial difference between the sites may cause a difference in channel large-scale parameters of received links from different sites, such as a Doppler frequency offset, a delay extension, etc. The channel large-scale parameter may directly affect adjustment and optimization of a filter coefficient during channel estimation. For signals transmitted from different sites, different channels may be employed to estimate a filter parameter to adapt to a corresponding channel propagation characteristic.

Thus, although the difference in a spatial location or angle of each site is transparent to user equipment (UE) and to the CoMP operation itself, the effect of the spatial difference on the channel large-scale parameter is an important factor to be considered by the terminal when performing channel estimation and reception detection. The QCL of two antenna ports in the context of some large-scale parameters refers to a situation where the large-scale parameters of the two ports are the same. Alternatively, as long as the large-scale parameters of the two ports are the same, regardless of a difference in actual physical locations or corresponding antenna panel orientations, the terminal may consider that the two ports originate from the same location (i.e., QCL).

For some typical application scenarios, considering a possible QCL relationship between respective reference signals, from the perspective of simplifying a signaling, several large-scale parameters of the channels are categorized into the following four types in the NR, which facilitates the system to perform configuration/indication based on different scenarios:
1) QCL-TypeA: {Doppler shift, Doppler spread, average delay, delay spread}
   - Except the spatial reception parameter, other large-scale parameters are the same.
   - For a frequency below 6 GHz, the spatial reception parameter may not be required.
2) QCL-TypeB: {Doppler shift, Doppler spread}
   - This type is merely for following two cases of the frequency below 6 GHz.
3) QCL-TypeC: {Doppler shift, average delay}
4) QCL-TypeD: {spatial reception parameter}

As mentioned above, since the spatial reception parameter is mainly for a frequency above 6 GHz, the QCL-TypeD is treated as a separate QCL type.

In order to understand the method and apparatus for transmitting a PUSCH in embodiments of the disclosure better, description may be made below to a communication system to which embodiments of the disclosure are applicable.

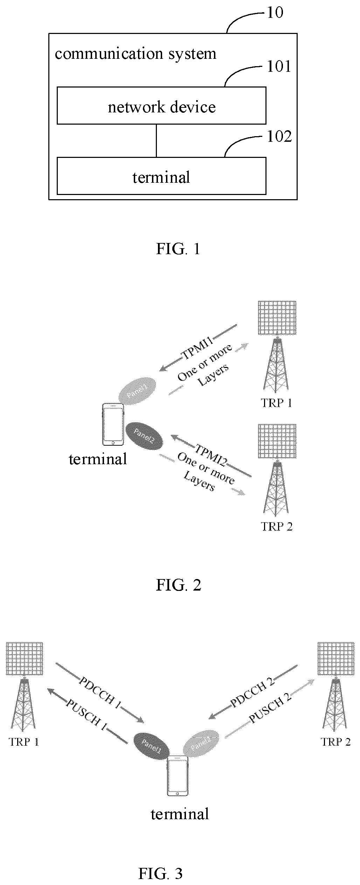

Referring to FIG. 1, which is a block diagram illustrating an architecture of a communication system according to an embodiment of the disclosure. The communication system may include, but is not limited to, a network side device and a terminal. The number and a form of the devices illustrated in FIG. 1 are only for example and do not constitute a limitation to embodiments of the disclosure, and two or more network side devices and two or more terminals may be included in a practical application. For example, the communication system 10 as illustrated in FIG. 1 includes one network side device 101 and one terminal 102.

It should be noted that a technical solution in embodiments of the disclosure is applicable to various communication systems, such as, a long term evolution (LTE) system, a 5th generation (5G) mobile communication system, a 5G NR system or other future new mobile communication systems. It should further be noted that a side link in embodiments of the disclosure may also be called a lateral link or a direct link.

The network side device 101 in embodiments of the disclosure is an entity for transmitting or receiving a signal at a network side. For example, the network side device 11 may be an evolved NodeB (eNB), a TRP, a next generation NodeB (gNB) in an NR system, a base station in other future mobile communication systems, or an access node in a wireless fidelity (WiFi) system. A detailed technology and a detailed device form employed by the base station are not limited in embodiments of the disclosure. The base station according to embodiments of the disclosure may be combined by a central unit (CU) and a distributed unit (DU). The CU may also be called a control unit. Protocol layers of a base station, such as a base station, may be split by using a CU-DU structure, so that functions of some of the protocol layers are placed in the CU for centralized control, and functions of some or all of remaining protocol layers are distributed in the DU which is centrally controlled by the CU.

The terminal 102 in embodiments of the disclosure is an entity for receiving or transmitting a signal at a user side, such as, a mobile phone. The terminal may be called a terminal device, a user equipment (UE), a mobile station (MS), a mobile terminal (MT), etc. The terminal may be an automobile with a communication function, a smart automobile, a mobile phone, a wearable device, a tablet (Pad), a computer with a wireless receiving and sending function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A detailed technology employed by the terminal and a detailed device form employed by the terminal are not limited in embodiments of the disclosure.

It may be understood that the communication system described in embodiments of the disclosure are intended to explain the technical solution of embodiments of the disclosure more clearly, and does not constitute a limitation to the technical solution according to embodiments of the disclosure. The skilled in the art know that, with evolution of a system architecture and emergence of a new service scenario, the technical solution according to embodiments of the disclosure are equally applied to a similar technical problem.

Description is made below to a method and an apparatus for transmitting a PUSCH in the disclosure in combination with the accompanying drawings.

In the related art, an uplink PUSCH transmission is transmitted to directions of the multiple TRPs of the network side device (base station). In R17, the coordinated transmission in the TDM transmission way is mainly standardized, and different repetition transmissions of same information in the PUSCH are transmitted to different TRPs of the base station through different transmission occasions (TOs) of the time domain in a time-division method. Such method has a low requirement for a terminal capability and does not require the terminal to support simultaneous beam transmission, but the transmission delay is large. The different repetition transmissions of the same information in the uplink transmission refers to that the same information may be transmitted repeatedly N (N ≥ 2) times in the uplink transmission. The repeated transmissions are called the different repetition transmissions of the same information in the uplink transmission. Through different TOs in the time domain, the repetition transmissions may be transmitted by employing different TRPs.

For the uplink transmission, for PUSCH channels oriented to different TRPs, channels which the uplink transmission actually employs have very different spatial characteristics. Thus, different PUSCH channels in different sending directions are considered to have different QCL-Ds.

In embodiments of the disclosure, it is desired that simultaneous coordinated transmission in the directions of the multiple TRPs of the network side device (base station) is realized by multiple antenna panels of a terminal, to increase the reliability and throughput rate of the transmission, and to reduce the transmission delay under the multiple TRPs. In this case, the terminal is required to have a capability of simultaneously sending the multiple beams. The PUSCH transmission may be a multi-panel/TRP transmission scheduled based on a single physical downlink control channel (PDCCH), i.e., single downlink control information (S-DCI). As illustrated in FIG. 2, the PUSCH transmission between the terminal and the TRP of the base station is performed by a transmitted precoding matrix indicator (TPMI). As illustrated in FIG. 3, the PUSCH transmission between the terminal and the TRP of the base station may also be performed based on a multi-panel/TRP transmission scheduled by different PDCCHs, i.e., multiple DCI (M-DCI).

In a possible implementation, a link between transmission points may be a relatively ideal backhaul link supporting a high throughput and a very low backhaul delay, or a non-ideal backhaul link using x digital subscriber line (x DSL), microwave, or relay. A non-coherent joint transmission (NC-JT) transmission solution based on the M-DCI is primarily introduced for the non-ideal backhaul case, but such solution may also be used for the ideal backhaul case.

In embodiments of the disclosure, under the M-DCI, a control resource set (CORESET) parameter with a CORESET pool index being "0" and "1" for scheduling the PDCCH to distinguish between different coordinated TRPs.

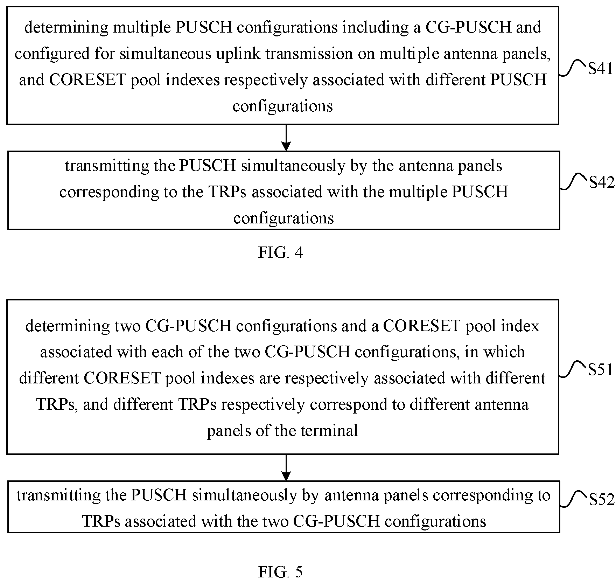

Referring to FIG. 4, FIG. 4 is a flow chart illustrating a method for transmitting a PUSCH according to an embodiment of the disclosure.

As illustrated in FIG. 4, the method is performed by a terminal. The method may include, but is not limited to, the following.

At block S41: multiple PUSCH configurations including a configured grant-PUSCH (CG-PUSCH) and configured for simultaneous uplink transmission on multiple antenna panels, and CORESET pool indexes respectively associated with the multiple PUSCH configurations are determined, in which different CORESET pool indexes are respectively associated with different TRPs, and different TRPs respectively correspond to different antenna panels of the terminal.

In embodiments of the disclosure, the terminal may determine the multiple PUSCH configurations based on a protocol agreement, or an indication from a network side device, or both the protocol agreement and the indication from the network side device.

The terminal determines the multiple PUSCH configurations, and different CORESET pool indexes are respectively associated with different PUSCH configurations.

In embodiments of the disclosure, the terminal may determine two PUSCH configurations, and may associate coordinated different TRPs by employing a CORESET parameter with the CORESET pool index for scheduling the PDCCH. The CORESET pool index may be "0" or " 1", respectively presenting different TRPs associated.

In embodiments of the disclosure, different CORESET pool indexes are respectively associated with different TRPs, and different TRPs respectively correspond to different antenna panels of the terminal.

At block S42: the PUSCH is transmitted simultaneously by the antenna panels corresponding to the TRPs associated with the multiple PUSCH configurations.

In embodiments of the disclosure, the terminal determines the multiple PUSCH configurations, determines the CORESET pool index associated with each PUSCH configuration, and determines the TRPs associated, and thus determines corresponding antenna panels of the terminal.

Based on the above, the terminal determines the multiple PUSCH configurations including the CG-PUSCH and configured for the simultaneous uplink transmission on the multiple antenna panels, and the CORESET pool indexes respectively associated with different PUSCH configurations, in which different CORESET pool indexes are respectively associated with different TRPs, and different TRPs respectively correspond to different antenna panels of the terminal. The PUSCH is transmitted simultaneously by the antenna panels corresponding to the TRPs associated with the multiple PUSCH configurations. Thus, the PUSCH may be transmitted simultaneously to directions of multiple TRPs of the network side device by the multiple antenna panels of the terminal, thus realizing simultaneous coordinated transmission, increasing the reliability and the throughput rate of the transmission, and reducing the transmission delay under the multiple TRPs.

It may be understood that in the related art, in the R16, when downlink PDSCH transmission based on the M-DCI is supported, for uplink, an M-TRP TDM transmission solution of a dynamic grant PUSCH (DG-PUSCH) based on the M-DCI is also supported, that is, a repetition transmission solution in which two PUSCHs do not overlap in the time domain. Meanwhile, the network side device may only configure one sounding reference signal (SRS) resource set for the terminal. In the M-DCI solution in the R16, an uplink M-TRP transmission of the CG-PUSCH is not supported.

In embodiments of the disclosure, an uplink multiple input multiple output (MIMO) enhancement of the R18 or other releases considers the multiple antenna panels, to enable the terminal to realize a simultaneous uplink transmission to the multiple TRPs. The terminal determines the multiple PUSCH configurations and the CORESET pool indexes respectively associated with the multiple PUSCH configurations, different CORESET pool indexes are respectively associated with different TRPs, and different TRPs respectively correspond to different antenna panels of the terminal. Then, the terminals may simultaneously perform the PUSCH transmission by the antenna panels corresponding to the TRPs associated. Thus, the PUSCH transmission may be performed simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

In some embodiments, determining the multiple PUSCH configurations including the CG-PUSCH and configured for simultaneous uplink transmission on the multiple antenna panels and the CORESET pool indexes respectively associated with the multiple PUSCH configurations by the terminal includes: determining two CG-PUSCH configurations and a CORESET pool index associated with each of the two CG-PUSCH configurations.

In embodiments of the disclosure, determining the multiple PUSCH configurations by the terminal may include: determining the two CG-PUSCH configurations. Determining the CORESET pool indexes respectively associated with the multiple PUSCH configurations by the terminal may include: determining the CORESET pool index associated with each of the two CG-PUSCH configurations. The two CG-PUSCH configurations may be determined based on the protocol agreement, the indication from the network side device, or both the protocol agreement and the indication from the network side device.

It may be understood that the terminal determines the two CG-PUSCH configurations, and the two CG-PUSCH configurations is respectively associated with different CORESET pool indexes. For example, the CORESET pool indexes respectively associated with the two CG-PUSCH configurations are "0" and "1". The associated CORESET pool indexes "0" and "1" represents different TRPs associated respectively. Thus, a TRP associated with each CG-PUSCH configuration may be determined.

In embodiments of the disclosure, the terminal determines the two CG-PUSCH configurations and the CORESET pool index associated with each of the two CG-PUSCH configurations, determines different TRPs associated with different CG-PUSCH configurations, and then determines an antenna panel of the terminal corresponding to each TRP.

Based on the above, the two CG-PUSCH configurations and the CORESET pool indexes associated with different CG-PUSCH configurations are determined by the terminal, in which different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the two CG-PUSCH configurations. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, reducing the transmission delay in the multiple TRPs.

It may be understood that a transmission of a CG-PUSCH supports two scheduling-free solutions for the uplink, with different activating ways.

For a CG-PUSCH configuration of type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For a CG-PUSCH configuration of type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH configuration of the type two by a media access control (MAC) control signaling sent in the uplink.

In some embodiments, determining the two CG-PUSCH configurations and the CORESET pool index associated with each of the two CG-PUSCH configurations by the terminal includes: receiving an RRC signaling sent by a network side device; and determining two CG-PUSCH configurations of type one and a first CORESET pool index and a second CORESET pool index respectively associated with the two CG-PUSCH configurations of the type one based on the RRC signaling, in which the first CORESET pool index is different from the second CORESET pool index.

In embodiments of the disclosure, determining the two CG-PUSCH configurations by the terminal may be: determining the two CG-PUSCH configurations of the type one.

The terminal receives the RRC signaling sent by the network side device, and determines the two CG-PUSCH configurations of the type one and the first CORESET pool index and the second CORESET pool index respectively associated with the two CG-PUSCH configurations of the type one based on the RRC signaling, in which the first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling sent by the network side device, and determines the two CG-PUSCH configurations of the type one, the first CORESET pool index "0" associated with a first CG-PUSCH configuration of the type one, and the second CORESET pool index "1" associated with a second CG-PUSCH configuration of the type one based on the RRC signaling. Then, it may be determined that the first CG-PUSCH configuration of the type one is associated with the TRP1 and the second CG-PUSCH configuration of the type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type one, the PUSCH may be transmitted by the Panel2 corresponding to the TRP2 based on the second CG-PUSCH configuration of the type one, and the PUSCH may be transmitted simultaneously. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, reducing the transmission delay in the multiple TRPs.

In some embodiments, determining the two CG-PUSCH configurations and the CORESET pool index associated with each of the two CG-PUSCH configurations by the terminal includes: receiving an RRC signaling and a PDCCH carrying activating DCI sent by the network side device, in which the activating DCI schedules a first CORESET pool index and a second CORESET pool index respectively; and determining two CG-PUSCH configurations of type two and the first CORESET pool index and the second CORESET pool index respectively associated with the two CG-PUSCH configurations of the type two based on the RRC signaling and the activating DCI, in which the first CORESET pool index is different from the second CORESET pool index.

In embodiments of the disclosure, determining the two CG-PUSCH configurations by the terminal may be: determining the two CG-PUSCH configurations of the type two.

The terminal receives the RRC signaling and the PDCCH carrying the activating DCI sent by the network side device, in which the activating DCI schedules the first CORESET pool index and the second CORESET pool index respectively; and determines the two CG-PUSCH configurations of the type two and the first CORESET pool index and the second CORESET pool index respectively associated with the two CG-PUSCH configurations of the type two based on the RRC signaling and the activating DCI, in which the first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the first CORESET pool index and the second CORESET pool index respectively; and determines the two CG-PUSCH configurations of the type two, the first CORESET pool index "0" associated with a first CG-PUSCH configuration of the type two, and the second CORESET pool index "1" associated with a second CG-PUSCH configuration of the type two based on the RRC signaling and the activating DCI. Thus, it may be determined that the first CG-PUSCH configuration of the type two is associated with the TRP1, and the second CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type two, the PUSCH may be transmitted by the Panel2 corresponding to the TRP2 based on the second CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, determining the two CG-PUSCH configurations and the CORESET pool index associated with each of the two CG-PUSCH configurations by the terminal includes: receiving an RRC signaling and a PDCCH carrying activating DCI sent by a network side device, the activating DCI scheduling a second CORESET pool index; determining one CG-PUSCH configuration of type one, and a first CORESET pool index associated with the CG-PUSCH configuration of the type one based on the RRC signaling; and determining one CG-PUSCH configuration of type two, and the second CORESET pool index associated with the CG-PUSCH configuration of type two based on the RRC signaling and the activating DCI, in which the first CORESET pool index is different from the second CORESET pool index.

In embodiments of the disclosure, determining the two CG-PUSCH configurations by the terminal may include: determining one CG-PUSCH configuration of the type one and one CG-PUSCH configuration of the type two.

The terminal receives the RRC signaling and the PDCCH carrying the activating DCI sent by the network side device, the activating DCI scheduling the second CORESET pool index; determines one CG-PUSCH configuration of the type one, and the first CORESET pool index associated with the CG-PUSCH configuration of the type one based on the RRC signaling; and determines one CG-PUSCH configuration of the type two and the second CORESET pool index associated with the CG-PUSCH configuration of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the second CORESET pool index; determines one CG-PUSCH configuration of the type one and the first CORESET pool index "0" associated with a first CG-PUSCH configuration of the type one based on the RRC signaling; and determines one CG-PUSCH configuration of the type two and the second CORESET pool index "1" associated with a second CG-PUSCH configuration of the type two based on the RRC signaling and the activating DCI. Then, it may be determined that the first CG-PUSCH configuration of the type one is associated with the TRP1 and the second CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the CG-PUSCH configuration of the type one, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, determining the multiple PUSCH configurations, and the CORESET pool indexes respectively associated with different PUSCH configurations by the terminal includes: determining one CG-PUSCH configuration, one DG-PUSCH configuration, and different CORESET pool indexes respectively associated with the CG-PUSCH configuration and the DG-PUSCH configuration.

In some embodiments, determining the multiple PUSCH configurations by the terminal may include: determining one CG-PUSCH configuration and one DG-PUSCH configuration. Determining the CORESET pool indexes respectively associated with different PUSCH configurations by the terminal may include: determining different CORESET pool indexes respectively associated with the CG-PUSCH configuration and the DG-PUSCH configuration.

The terminal may determine one CG-PUSCH configuration and one DG-PUSCH configuration based on the protocol agreement, an indication from the network side device, or both the protocol agreement and the indication from the network side device.

It may be understood that the terminal determines one CG-PUSCH configuration and one DG-PUSCH configuration. The CG-PUSCH configuration and the DG-PUSCH configuration are associated with different CORESET pool indexes respectively. The CORESET pool indexes respectively associated with the CG-PUSCH configuration and the DG-PUSCH configuration are "0" and "1". The associated CORESET pool indexes "0" and "1" represent different TRPs associated respectively. Thus, the TRPs associated with the CG-PUSCH configuration and the DG-PUSCH configuration respectively may be determined.

In embodiments of the disclosure, the terminal determines one CG-PUSCH configuration, one DG-PUSCH configuration, and different CORESET pool indexes respectively associated with the CG-PUSCH configuration and the DG-PUSCH configuration, determines the TRPs respectively associated with the CG-PUSCH configuration and the DG-PUSCH configuration, and then determines an antenna panel of the terminal corresponding to each TRP.

In some embodiments, determining one CG-PUSCH configuration, one DG-PUSCH configuration, and different CORESET pool indexes respectively associated with the CG-PUSCH configuration and the DG-PUSCH configuration includes: receiving a PDCCH carrying scheduling DCI sent by a network side device; determining the DG-PUSCH configuration and a first CORESET pool index associated with the DG-PUSCH configuration based on the scheduling DCI; receiving an RRC signaling sent by the network side device; and determining a CG-PUSCH configuration of type one and a second CORESET pool index associated with the CG-PUSCH configuration of the type one based on the RRC signaling, in which the first CORESET pool index is different from the second CORESET pool index.

In embodiments of the disclosure, determining one CG-PUSCH configuration and one DG-PUSCH configuration by the terminal may include determining one CG-PUSCH configuration of the type one and one DG-PUSCH configuration.

The terminal receives the PDCCH carrying the scheduling DCI sent by the network side device, and determines the DG-PUSCH configuration and the first CORESET pool index associated with the DG-PUSCH configuration based on the scheduling DCI. The terminal receives the RRC signaling sent by the network side device, and determines the CG-PUSCH configuration of the type one and the second CORESET pool index associated with the CG-PUSCH configuration of the type one based on the RRC signaling, in which the first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device, and determines the DG-PUSCH configuration and the first CORESET pool index "0" associated with the DG-PUSCH configuration based on the scheduling DCI. The terminal receives the RRC signaling sent by the network side device, and determines the CG-PUSCH configuration of the type one and the second CORESET pool index "1" associated with the CG-PUSCH configuration of the type one based on the RRC signaling. Then, it may be determined that the DG-PUSCH configuration is associated with the TRP1 and the CG-PUSCH configuration of the type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, and the PUSCH may be transmitted by the Panel2 corresponding to the TRP2 based on the CG-PUSCH configuration of the type one, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, determining one CG-PUSCH configuration, one DG-PUSCH configuration and different CORESET pool indexes respectively associated with the CG-PUSCH configuration and the DG-PUSCH configuration by the terminal includes: receiving a PDCCH carrying scheduling DCI sent by a network side device; determining the DG-PUSCH configuration and a first CORESET pool index associated with the DG-PUSCH configuration based on the scheduling DCI; receiving an RRC signaling and a PDCCH carrying activating DCI sent by the network side device, the activating DCI scheduling a second CORESET pool index; and determining a CG-PUSCH configuration of type two and a second CORESET pool index associated with the CG-PUSCH configuration of the type two based on the RRC signaling and the activating DCI, in which the first CORESET pool index is different from the second CORESET pool index.

In embodiments of the disclosure, determining one CG-PUSCH configuration and one DG-PUSCH configuration by the terminal may include determining one CG-PUSCH configuration of the type two and one DG-PUSCH configuration.

The terminal receives the PDCCH carrying the scheduling DCI sent by the network side device; and determines the DG-PUSCH configuration and the first CORESET pool index associated with the DG-PUSCH configuration based on the scheduling DCI. The terminal receives the RRC signaling and the PDCCH carrying the activating DCI sent by the network side device, the activating DC scheduling the second CORESET pool index; and determines the CG-PUSCH configuration of the type two and the second CORESET pool index associated with the CG-PUSCH configuration of the type two based on the RRC signaling and the activating DCI, in which the first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device; determines the DG-PUSCH configuration and the first CORESET pool index "0" associated with the DG-PUSCH configuration based on the scheduling DCI. The terminal receives the RRC signaling and the activating DCI sent by the network side device, and determines the CG-PUSCH configuration of the type two and the second CORESET pool index "1" associated with the CG-PUSCH configuration of the type two based on the RRC signaling and the activating DCI. Thus, it may be determined that the DG-PUSCH configuration is associated with the TRP1 and the CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

It should be noted that, the term "one" in embodiments of the disclosure refers to at least one, and is not limited to exactly one. Similarly, the term "two" also refers to at least two, and is not limited to exactly two. The "CORESET pool index" in embodiments of the disclosure may be any identifier that identifies a CORESET pool, an expression form of "CORESET pool index" is not limited to the examples described in the above embodiments.

Referring to FIG. 5, FIG. 5 is a flow chart illustrating a method for transmitting a PUSCH according to another embodiment of the disclosure.

As illustrated in FIG. 5, the method is performed by a terminal. The method may include, but is not limited to, the following.

At block S51: two CG-PUSCH configurations and a CORESET pool index associated with each of the two CG-PUSCH configurations are determined, in which different CORESET pool indexes are respectively associated with different TRPs, and different TRPs respectively correspond to different antenna panels of the terminal.

In embodiments of the disclosure, the terminal determines the two CG-PUSCH configurations and the CORESET pool index associated with each of the two CG-PUSCH configurations.

The terminal may determine the two CG-PUSCH configurations based on a protocol agreement, an indication from a network side device, or both the protocol agreement and the indication from the network side device.

It may be understood that the terminal determines the two CG-PUSCH configurations, and the two CG-PUSCH configurations is respectively associated with different CORESET pool indexes. For example, the CORESET pool indexes respectively associated with the two CG-PUSCH configurations are "0" and "1". The associated CORESET pool indexes "0" and "1" represent different TRPs associated respectively. Thus, different TRPs associated with different CG-PUSCH configurations may be determined.

At block S52: the PUSCH is transmitted simultaneously by antenna panels corresponding to TRPs associated with the two CG-PUSCH configurations.

In embodiments of the disclosure, the terminal determines the two CG-PUSCH configurations and the CORESET pool index associated with each of the two CG-PUSCH configurations, and determines different TRPs associated with different CG-PUSCH configurations, and then determines an antenna panel of the terminal corresponding to each TRP.

Based on the above, the two CG-PUSCH configurations and the CORESET pool indexes associated with different CG-PUSCH configurations are determined by the terminal, in which different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the two CG-PUSCH configurations. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

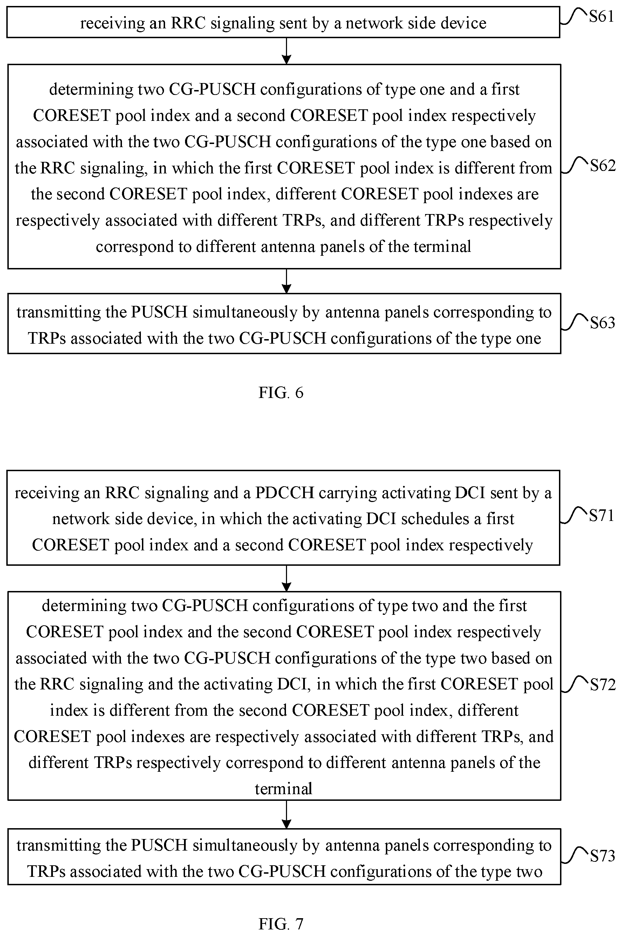

Referring to FIG. 6, FIG. 6 is a flow chart illustrating a method for transmitting a PUSCH according to a still another embodiment of the disclosure.

As illustrated in FIG. 6, the method is performed by a terminal. The method may include, but is not limited to, the following.

At block S61: an RRC signaling sent by a network side device is received.

At block S62: two CG-PUSCH configurations of type one, a first CORESET pool index and a second CORESET pool index respectively associated with the two CG-PUSCH configurations of the type one are determined based on the RRC signaling, in which the first CORESET pool index is different from the second CORESET pool index, different CORESET pool indexes are respectively associated with different TRPs, and different TRPs respectively correspond to different antenna panels of the terminal.

At block S63: the PUSCH is transmitted simultaneously by antenna panels corresponding to TRPs associated with the two CG-PUSCH configurations of the type one.

In embodiments of the disclosure, the terminal receives the RRC signaling sent by the network side device, and determines the two CG-PUSCH configurations of the type one, the first CORESET pool index and the second CORESET pool index respectively associated with the two CG-PUSCH configurations of the type one based on the RRC signaling, in which the first CORESET pool index is different from the second CORESET pool index.

For the CG-PUSCH configuration of the type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For example, the first CORESET pool index is "0" and the second CORESET pool index is "1". The first CORESET pool index is different from the second CORESET pool index. The first CORESET pool index and the second CORESET pool index are respectively associated with different TRPs. For example, a first CORESET pool index of the type one is associated with TRP1 and a second CORESET pool index of the type one is associated with TRP2.

The terminal receives the RRC signaling sent by the network side device, and determines the two CG-PUSCH configurations of the type one, the first CORESET pool index "0" associated with a first CG-PUSCH configuration of the type one, and the second CORESET pool index "1" associated with a second CG-PUSCH configuration of the type one based on the RRC signaling. Then, it may be determined that the first CG-PUSCH configuration of the type one is associated with the TRP1 and the second CG-PUSCH configuration of type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type one, the PUSCH may be transmitted by the Panel2 corresponding to the TRP2 based on the second CG-PUSCH configuration of the type one, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the terminal may determine the two CG-PUSCH configurations of the type one and different CORESET pool indexes respectively associated with the two CG-PUSCH configurations of the type one, in which the different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the two CG-PUSCH configurations of the type one. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

Referring to FIG. 7, FIG. 7 is a flow chart illustrating a method for transmitting a PUSCH according to a still another embodiment of the disclosure.

As illustrated in FIG. 7, the method is performed by a terminal. The method may include, but is not limited to, the following.

At block S71: an RRC signaling and a PDCCH carrying activating DCI sent by a network side device is received, in which the activating DCI schedules a first CORESET pool index and a second CORESET pool index respectively.

At block S72: two CG-PUSCH configurations of type two and the first CORESET pool index and the second CORESET pool index respectively associated with the two CG-PUSCH configurations of the type two are determined based on the RRC signaling and the activating DCI, in which the first CORESET pool index is different from the second CORESET pool index, different CORESET pool indexes are respectively associated with different TRPs, and different TRPs respectively correspond to different antenna panels of the terminal.

At block S73: the PUSCH is transmitted simultaneously by antenna panels corresponding to TRPs associated with the two CG-PUSCH configurations of the type two.

The terminal receives the RRC signaling and the PDCCH carrying the activating DCI sent by the network side device, in which the activating DCI schedules the first CORESET pool index and the second CORESET pool index respectively; and determines the two CG-PUSCH configurations of the type two and the first CORESET pool index and the second CORESET pool index respectively associated with the two CG-PUSCH configurations of the type two based on the RRC signaling and the activating DCI, in which the first CORESET pool index is different from the second CORESET pool index.

For the CG-PUSCH configuration of the type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH configuration of the type two by an MAC control signaling sent in the uplink.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the first CORESET pool index and the second CORESET pool index respectively; and determines the two CG-PUSCH configurations of the type two, the first CORESET pool index "0" associated with a first CG-PUSCH configuration of the type two, and the second CORESET pool index "1" associated with a second CG-PUSCH configuration of the type two based on the RRC signaling and the activating DCI. Then, it may be determined that the first CG-PUSCH configuration of the type two is associated with the TRP1 and the second CG-PUSCH configuration of the type two may is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type two, the PUSCH may be transmitted by the Panel2 corresponding to the TRP2 based on the second CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the terminal may determine the two CG-PUSCH configurations of the type two and different CORESET pool indexes respectively associated with the two CG-PUSCH configurations of the type two, in which the different CORESET pool indexes are respectively associated with different TRPs, and different TRPs respectively correspond to different antenna panels of the terminal. Further, the terminal may simultaneously transmit the PUSCH by the antenna panels corresponding to the TRPs associated with the two CG-PUSCH configurations of the type two. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

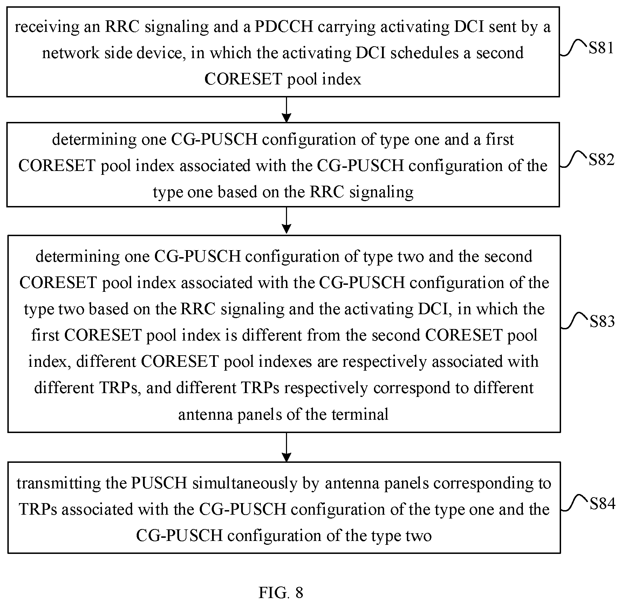

Referring to FIG. 8, FIG. 8 is a flow chart illustrating a method for transmitting a PUSCH according to a still another embodiment of the disclosure.

As illustrated in FIG. 8, the method is performed by a terminal. The method may include, but is not limited to, the following.

At block S81: an RRC signaling and a PDCCH carrying activating DCI sent by a network side device are received, in which the activating DCI schedules a second CORESET pool index.

At block S82: one CG-PUSCH configuration of type one and a first CORESET pool index associated with the CG-PUSCH configuration of the type one are determined based on the RRC signaling.

At block S83: one CG-PUSCH configuration of type two and a second CORESET pool index associated with the CG-PUSCH configuration of type two are determined based on the RRC signaling and the activating DCI, in which the first CORESET pool index is different from the second CORESET pool index, different CORESET pool indexes are respectively associated with different TRPs, and different TRPs respectively correspond to different antenna panels of the terminal.

At block S84: the PUSCH is transmitted simultaneously by antenna panels corresponding to TRPs associated with the CG-PUSCH configuration of the type one and the CG-PUSCH configuration of the type two.

In embodiments of the disclosure, the terminal determines the CG-PUSCH configuration of the type one and the CG-PUSCH configuration of the type two.

The terminal receives the RRC signaling and the PDCCH carrying the activating DCI sent by the network side device, the activating DCI scheduling the second CORESET pool index; determines one CG-PUSCH configuration of the type one, and the first CORESET pool index associated with the CG-PUSCH configuration of the type one based on the RRC signaling; and determines one CG-PUSCH configuration of the type two, and the second CORESET pool index associated with the CG-PUSCH configuration of the type two based on the RRC signaling and the activating DCI, in which the first CORESET pool index is different from the second CORESET pool index.

For the CG-PUSCH configuration of the type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For the CG-PUSCH configuration of the type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH configuration of the type two by a media access control (MAC) control signaling sent in the uplink.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the second CORESET pool index; determines one CG-PUSCH configuration of the type one and the first CORESET pool index "0" associated with the CG-PUSCH configuration of the type one based on the RRC signaling; and determines one CG-PUSCH configuration of the type two and the second CORESET pool index "1" associated with the CG-PUSCH configuration of the type two based on the RRC signaling and the activating DCI. Then, it may be determined that the CG-PUSCH configuration of the type one is associated with the TRP1 and the CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the CG-PUSCH configuration of the type one, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the terminal may determine the CG-PUSCH configuration of the type one and the first CORESET pool index associated with the CG-PUSCH configuration of the type one and determine the CG-PUSCH configuration of the type two and the second CORESET pool index associated with the CG-PUSCH configuration of the type two, in which different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the CG-PUSCH configuration of the type one and the CG-PUSCH configuration of the type two. Thus, the PUSCH may be transmitted simultaneously to the directions of the multiple TRPs of the network side device by the multiple antenna panels of the terminal, realizing the simultaneous coordinated transmission, thus increasing the reliability and the throughput rate of the transmission, reducing the transmission delay in the multiple TRPs.

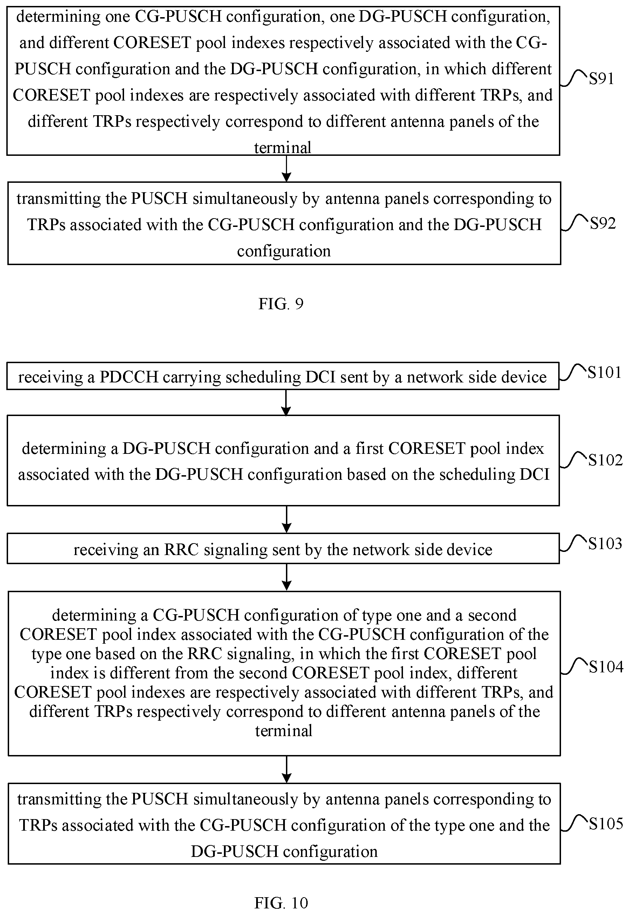

Referring to FIG. 9, FIG. 9 is a flow chart illustrating a method for transmitting on a PUSCH according to a still another embodiment of the disclosure.

As illustrated in FIG. 9, the method is performed by a terminal. The method may include, but is not limited to, the following.

At block S91: one CG-PUSCH configuration, one DG-PUSCH configuration, and different CORESET pool indexes respectively associated with the CG-PUSCH configuration and the DG-PUSCH configuration are determined, in which different CORESET pool indexes are respectively associated with different TRPs, and different TRPs respectively correspond to different antenna panels of the terminal.

At block S92: the PUSCH is transmitted simultaneously by antenna panels corresponding to TRPs associated with the CG-PUSCH configuration and the DG-PUSCH configuration.

In embodiments of the disclosure, determining the multiple PUSCH configurations by the terminal may include: determining one CG-PUSCH configuration and one DG-PUSCH configuration. Determining the CORESET pool indexes respectively associated with different PUSCH configurations by the terminal includes: determining different CORESET pool indexes respectively associated with the CG-PUSCH configuration and the DG-PUSCH configuration.

The terminal may determine one CG-PUSCH configuration and one DG-PUSCH configuration based on the protocol agreement, an indication from the network side device, or both the protocol agreement and the indication from the network side device.

It may be understood that the terminal determines one CG-PUSCH configuration, one DG-PUSCH configuration, and different CORESET pool indexes associated with the CG-PUSCH configuration and the DG-PUSCH configuration respectively. The CORESET pool indexes respectively associated with the CG-PUSCH configuration and the DG-PUSCH configuration are "0" and "1". The associated CORESET pool indexes "0" and "1" represent different TRPs associated respectively. Thus, the TRPs associated with the CG-PUSCH configuration and the DG-PUSCH configuration respectively may be determined.

In embodiments of the disclosure, the terminal determines one CG-PUSCH configuration, one DG-PUSCH configuration, and different CORESET pool indexes respectively associated with the CG-PUSCH configuration and the DG-PUSCH, determines the TRPs associated with the CG-PUSCH configuration and the DG-PUSCH configuration respectively, and then determines an antenna panel of the terminal corresponding to each TRP.

Based on the above, the terminal may determine one CG-PUSCH configuration, one DG-PUSCH configuration, and different CORESET pool indexes respectively associated with the CG-PUSCH configuration and the DG-PUSCH configuration, in which different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the CG-PUSCH configuration and the DG-PUSCH configuration. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay under the multiple TRPs.

Referring to FIG. 10, FIG. 10 is a flow chart illustrating a method for transmitting a PUSCH according to a still another embodiment of the disclosure.

As illustrated in FIG. 10, the method is performed by a terminal. The method may include, but is not limited to, the following.

At block S101: a PDCCH carrying scheduling DCI sent by a network side device is received.

At block S102: a DG-PUSCH configuration and a first CORESET pool index associated with the DG-PUSCH configuration are determined based on the scheduling DCI.

At block S103: an RRC signaling sent by the network side device is received.

At block S104: a CG-PUSCH configuration of type one and a second CORESET pool index associated with the CG-PUSCH configuration of the type one are determined based on the RRC signaling, in which the first CORESET pool index is different from the second CORESET pool index, different CORESET pool indexes are respectively associated with different TRPs, and different TRPs respectively correspond to different antenna panels of the terminal.

At block S105: the PUSCH is transmitted simultaneously by antenna panels corresponding to TRPs associated with the CG-PUSCH configuration of the type one and the DG-PUSCH configuration.

In embodiments of the disclosure, the terminal determines one CG-PUSCH configuration of the type one and one DG-PUSCH configuration.

The terminal receives the PDCCH carrying the scheduling DCI sent by the network side device and determines the DG-PUSCH configuration and the first CORESET pool index associated with the DG-PUSCH configuration based on the scheduling DCI. The terminal receives the RRC signaling sent by the network side device, and determines the CG-PUSCH configuration of the type one and the second CORESET pool index associated with the CG-PUSCH configuration of the type one based on the RRC signaling. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device, and determines the DG-PUSCH configuration and the first CORESET pool index "0" associated with the DG-PUSCH configuration based on the scheduling DCI. The terminal receives the RRC signaling sent by the network side device, and determines the CG-PUSCH configuration of the type one and the second CORESET pool index "1" associated with the CG-PUSCH configuration of the type one based on the RRC signaling, and then determines the TRP1 associated with the DG-PUSCH configuration and the TRP2 associated with the CG-PUSCH configuration of the type one.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type one, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the terminal may determine one CG-PUSCH configuration of the type one, the CORESET pool index associated with the CG-PUSCH configuration of the type one, one DG-PUSCH configuration, and the CORESET pool index associated with the DG-PUSCH configuration. Different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the CG-PUSCH configuration of the type one and the DG-PUSCH configuration. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

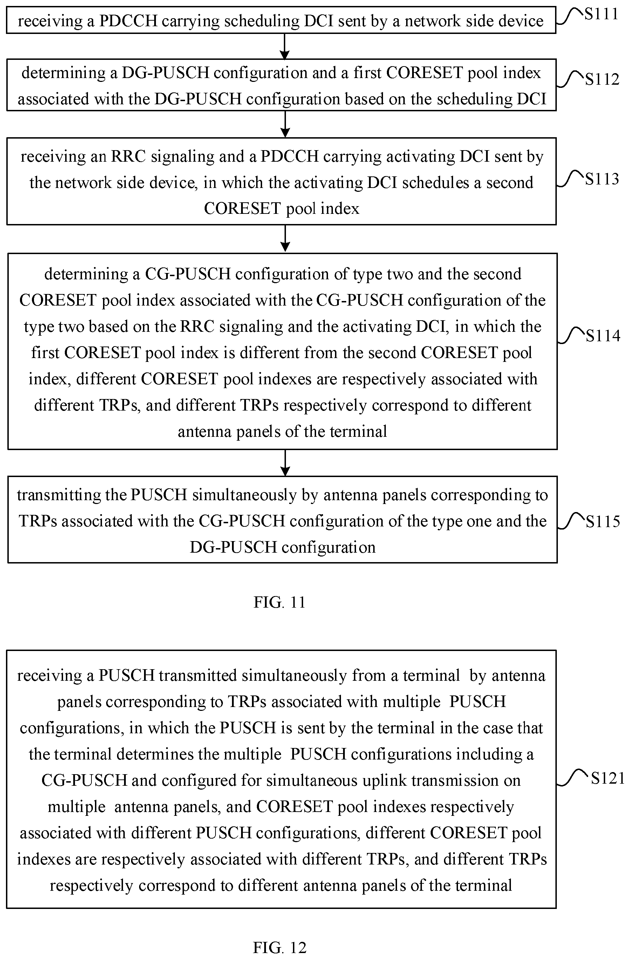

Referring to FIG. 11, FIG. 11 is a flow chart illustrating a method for transmitting a PUSCH according to a still another embodiment of the disclosure.

As illustrated in FIG. 11, the method is performed by a terminal. The method may include, but is not limited to, the following.

At block S111: a PDCCH carrying scheduling DCI sent by a network side device is received.

At block S112: a DG-PUSCH configuration and a first CORESET pool index associated with the DG-PUSCH configuration are determined based on the scheduling DCI.

At block S113: an RRC signaling and a PDCCH carrying activating DCI sent by the network side device are received, in which the activating DCI schedules a second CORESET pool index.

At block S114: a CG-PUSCH configuration of type two and a second CORESET pool index associated with the CG-PUSCH configuration of the type two are determined based on the RRC signaling and the activating DCI, in which the first CORESET pool index is different from the second CORESET pool index, different CORESET pool indexes are respectively associated with different TRPs, and different TRPs respectively correspond to different antenna panels of the terminal.

At block S115: the PUSCH is transmitted simultaneously by antenna panels corresponding to TRPs associated with the CG-PUSCH configuration of the type one and the DG-PUSCH configuration.

In embodiments of the disclosure, the terminal determines one CG-PUSCH configuration of the type two and one DG-PUSCH configuration.

The terminal receives the PDCCH carrying the scheduling DCI sent by the network side device; and determines the DG-PUSCH configuration and the first CORESET pool index associated with the DG-PUSCH configuration based on the scheduling DCI. The terminal receives the RRC signaling and the PDCCH carrying the activating DCI sent by the network side device, the activating DCI scheduling the second CORESET pool index; and determines the CG-PUSCH configuration of the type two and the second CORESET pool index associated with the CG-PUSCH configuration of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device; determines the DG-PUSCH configuration and the first CORESET pool index "0" associated with the DG-PUSCH configuration based on the scheduling DCI. The terminal receives the RRC signaling and the activating DCI sent by the network side device, and determines the CG-PUSCH configuration of the type two and the second CORESET pool index "1" associated with the CG-PUSCH configuration of the type two based on the RRC signaling and the activating DCI, and then determines the TRP1 associated with the DG-PUSCH configuration and the TRP2 associated with the CG-PUSCH configuration of the type two.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the terminal may determine one CG-PUSCH configuration of the type two, the CORESET pool index associated with the CG-PUSCH configuration of the type two, the DG-PUSCH configuration, and the CORESET pool index associated with the DG-PUSCH configuration. Different CORESET pool indexes are respectively associated with different TRPs, and different TRPs respectively correspond to different antenna panels of the terminal. Then, the terminal may simultaneously transmit the PUSCH by the antenna panels corresponding to the TRPs associated with the CG-PUSCH configuration of the type one and the DG-PUSCH configuration. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

Referring to FIG. 12, FIG. 12 is a flow chart illustrating a method for transmitting a PUSCH according to a still another embodiment of the disclosure.

As illustrated in FIG. 12, the method is performed by a network side device. The method may include, but is not limited to, the following.

At block S121: a PUSCH transmitted simultaneously is received from a terminal by antenna panels corresponding to TRPs associated with multiple PUSCH configurations, in which the PUSCH is sent by the terminal in the case that the terminal determines the multiple PUSCH configurations including a configured CG-PUSCH and configured for simultaneous uplink transmission on multiple antenna panels, and CORESET pool indexes respectively associated with different PUSCH configurations. Different CORESET pool indexes are respectively associated with different TRPs, and different TRPs respectively correspond to different antenna panels of the terminal.

In embodiments of the disclosure, the terminal may determine the multiple PUSCH configurations based on a protocol agreement, an indication from the network side device, or both the protocol agreement and the indication from the network side device.

The terminal determines the multiple PUSCH configurations, and different PUSCH configurations are respectively associated with different CORESET pool indexes.

In embodiments of the disclosure, the terminal may determine two PUSCH configurations and may associate coordinated different TRPs by employing a CORESET parameter with the CORESET pool index for scheduling the PDCCH. The CORESET pool index may be "0" or " 1", respectively presenting different TRPs associated.

In embodiments of the disclosure, different CORESET pool indexes are respectively associated with different TRPs, and different TRPs respectively correspond to different antenna panels of the terminal.

In embodiments of the disclosure, the terminal determines the multiple PUSCH configurations, determines the CORESET pool index associated with each PUSCH configuration, and determines the TRPs associated, and then determines corresponding antenna panels of the terminal.

Based on the above, the terminal determines the multiple PUSCH configurations and the CORESET pool indexes respectively associated with the plurality of PUSCH configurations. Different CORESET pool indexes are respectively associated with different TRPs, and different TRPs respectively correspond to different antenna panels of the terminal. The PUSCH is transmitted simultaneously by the antenna panels corresponding to the TRPs associated with the multiple PUSCH configurations. Thus, the PUSCH may be transmitted simultaneously to directions of multiple TRPs of the network side device by the multiple antenna panels of the terminal, thus realizing simultaneous coordinated transmission, increasing the reliability and the throughput rate of the transmission, and reducing the transmission delay under the multiple TRPs.

It may be understood that in the related art, in the R16, when downlink PDSCH transmission based on the M-DCI is supported, for uplink, an M-TRP TDM transmission solution of a dynamic grant PUSCH (DG-PUSCH) based on the M-DCI is also supported, that is, a repetition transmission solution in which two PUSCHs do not overlap in the time domain. Meanwhile, the network side device may only configure one SRS resource set for the terminal. In the M-DCI solution in the R16, an uplink M-TRP transmission of the CG-PUSCH is not supported.

In embodiments of the disclosure, an uplink MIMO enhancement of the R18 or other releases considers the multiple antenna panels, to enable the terminal to realize a simultaneous uplink transmission to the multiple TRPs. The terminal determines the multiple PUSCH configurations and the CORESET pool indexes respectively associated with the multiple PUSCH configurations, different CORESET pool indexes are respectively associated with different TRPs, and different TRPs respectively correspond to different antenna panels of the terminal. Then, the terminals may simultaneously perform the PUSCH transmission by the antenna panels corresponding to the TRPs associated. Thus, the PUSCH transmission may be performed simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

In some embodiments, the multiple PUSCH configurations include two CG-PUSCH configurations. The CORESET pool indexes respectively associated with different PUSCH configurations include different CORESET pool indexes associated with different CG-PUSCH configurations.

In embodiments of the disclosure, determining the multiple PUSCH configurations by the terminal may include: determining the two CG-PUSCH configurations. Determining the CORESET pool indexes respectively associated with different PUSCH configurations by the terminal may include: determining a CORESET pool index associated with each of the two CG-PUSCH configurations.

The terminal may determine the two CG-PUSCH configurations based on the protocol agreement, the indication from the network side device, or both the protocol agreement and the indication from the network side device.

It may be understood that the terminal determines the two CG-PUSCH configurations, and each of the two CG-PUSCH configurations is respectively associated with different CORESET pool index. The CORESET pool indexes respectively associated with each of the two CG-PUSCH configurations are "0" and "1". The associated CORESET pool indexes "0" and "1" represent different TRP associated respectively. Thus, different TRPs associated with different CG-PUSCH configurations may be determined.

In embodiments of the disclosure, the terminal determines the two CG-PUSCH configurations and the CORESET pool index associated with each of the two CG-PUSCH configurations, and determines different TRPs associated with different CG-PUSCH configurations, and then determines corresponding antenna panels of the terminal respectively the TRPs.

Based on the above, the two CG-PUSCH configurations and the CORESET pool indexes associated with different CG-PUSCH configurations are determined by the terminal, in which different CORESET pool indexes are respectively associated with different TRPs, and different TRPs respectively correspond to different antenna panels of the terminal. Then, the terminal may simultaneously transmit the PUSCH by the antenna panels corresponding to the TRPs associated. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, reducing the transmission delay in the multiple TRPs.

It may be understood that a transmission of a CG-PUSCH supports two scheduling-free solutions for the uplink, with different activating ways.

For a CG-PUSCH configuration of type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For a CG-PUSCH configuration of type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH of the type two by a media access control (MAC) control signaling sent in the uplink.

In some embodiments, the network side device sends an RRC signaling to the terminal; and receives the PUSCH transmitted simultaneously from the terminal by antenna panels corresponding to TRPs associated with two CG-PUSCH configurations of type one. The PUSCH is sent by the terminal in the case that the terminal determines the two CG-PUSCH configurations of the type one and a first CORESET pool index and a second CORESET pool index respectively associated with the two CG-PUSCH configurations of the type one based on the RRC signaling. The first CORESET pool index is different from the second CORESET pool index.

In embodiments of the disclosure, the two CG-PUSCH configurations determined by the terminal may be the two CG-PUSCH configurations of the type one determined.

The terminal receives the RRC signaling sent by the network side device, and determines the two CG-PUSCH configurations of the type one and the first CORESET pool index and the second CORESET pool index respectively associated with the two CG-PUSCH configurations of the type one based on the RRC signaling. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling sent by the network side device, and determines the two CG-PUSCH configurations of the type one, the first CORESET pool index "0" associated with a first CG-PUSCH configuration of the type one, and the second CORESET pool index "1" associated with a second CG-PUSCH configuration of the type one based on the RRC signaling. Then, it may be determined that the first CG-PUSCH configuration of the type one is associated with the TRP1 and the second CG-PUSCH configuration of the type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type one, the PUSCH may be transmitted by the Panel2 corresponding to the TRP2 based on the second CG-PUSCH configuration of the type one, and the PUSCH may be transmitted simultaneously. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, reducing the transmission delay in the multiple TRPs.

In some embodiments, the network side device sends an RRC signaling and a PDCCH carrying activating DCI to the terminal, the activating DCI scheduling a first CORESET pool index and a second CORESET pool index respectively; and receives a PUSCH transmitted simultaneously from the terminal by antenna panels corresponding to TRPs associated with two CG-PUSCH configurations of type two. The PUSCH is sent by the terminal in the case that the terminal determines the two CG-PUSCH configurations of type the two and the first CORESET pool index and the second CORESET pool index respectively associated with the two CG-PUSCH configurations of the type two based on the RRC signaling and the activating DCI. The first CORESET pool index is different from the second CORESET pool index.

In embodiments of the disclosure, the two CG-PUSCH configurations determined by the terminal may be the two CG-PUSCH configurations of the type two determined.

The terminal receives the RRC signaling and the PDCCH carrying the activating DCI sent by the network side device, the activating DCI scheduling the first CORESET pool index and the second CORESET pool index respectively; and determines the two CG-PUSCH configurations of the type two and the first CORESET pool index and the second CORESET pool index respectively associated with the two CG-PUSCH configurations of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the first CORESET pool index and the second CORESET pool index respectively; and determines the two CG-PUSCH configurations of the type two, the first CORESET pool index "0" associated with a first CG-PUSCH configuration of the type two and the second CORESET pool index "1" associated with a second CG-PUSCH configuration of the type two based on the RRC signaling and the activating DCI. Then, it may be determined that the first CG-PUSCH configuration of the type two is associated with the TRP1 and the second CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type two, the PUSCH may be transmitted by the Panel2 corresponding to the TRP2 based on the second CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, an RRC signaling and a PDCCH carrying activating DCI are sent to the terminal, the activating DCI scheduling a second CORESET pool index; and the PUSCH transmitted simultaneously is received from the terminal by antenna panels corresponding to TRPs associated with one CG-PUSCH configuration of type one and one CG-PUSCH configuration of type two. The PUSCH is sent by the terminal in the case that the terminal determines the CG-PUSCH configuration of the type one, and a first CORESET pool index associated with the CG-PUSCH configuration of the type one based on the RRC signaling, and determines the CG-PUSCH configuration of the type two, and a second CORESET pool index associated with the CG-PUSCH configuration of the type two based on the RRC signaling and the activating DCI. The first CORESET pool index is different from the second CORESET pool index.

In embodiments of the disclosure, the two CG-PUSCH configurations determined by the terminal may be: one CG-PUSCH configuration of the type one and one CG-PUSCH configuration of the type two determined.

The terminal receives the RRC signaling and the PDCCH carrying activating DCI sent by the network side device, the activating DCI scheduling the second CORESET pool index; determines the CG-PUSCH configuration of the type one, and the first CORESET pool index associated with the CG-PUSCH configuration of the type one based on the RRC signaling; and determines the CG-PUSCH configuration of type two and the second CORESET pool index associated with the CG-PUSCH configuration of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the second CORESET pool index; determines the CG-PUSCH configuration of the type one, the first CORESET pool index "0" associated with a first CG-PUSCH configuration of the type one based on the RRC signaling; and determines the CG-PUSCH configuration of the type two and the second CORESET pool index "1" associated with a second CG-PUSCH configuration of the type two based on the RRC signaling and the activating DCI. Then, it may be determined that the first CG-PUSCH configuration of the type one is associated with the TRP1 and the second CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the CG-PUSCH configuration of the type one, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, the multiple PUSCH configurations include one CG-PUSCH configuration and one DG-PUSCH configuration. The CORESET pool indexes respectively associated with different PUSCH configurations includes: different CORESET pool indexes respectively associated with the CG-PUSCH configuration and the DG-PUSCH configuration.

In some embodiments, the multiple PUSCH configurations determined by the terminal may be: one CG-PUSCH configuration and one DG-PUSCH configuration determined. The CORESET pool indexes respectively associated with different PUSCH configurations determined by the terminal includes: different CORESET pool indexes respectively associated with the CG-PUSCH configuration and the DG-PUSCH configuration determined.

The terminal may determine one CG-PUSCH configuration and one DG-PUSCH configuration based on the protocol agreement, or the indication from the network side device, or both the protocol agreement and the indication from the network side device.

It may be understood that the terminal determines one CG-PUSCH configuration and one DG-PUSCH configuration, and different CORESET pool indexes respectively associated with the CG-PUSCH configuration and the DG-PUSCH configuration. The CORESET pool indexes respectively associated with the CG-PUSCH configuration and the DG-PUSCH configuration are "0" and "1". The associated CORESET pool index "0" and "1" represent different TRPs associated respectively. Then, the TRPs associated with the CG-PUSCH configuration and the DG-PUSCH configuration respectively may be determined.

In embodiments of the disclosure, the terminal determines one CG-PUSCH configuration, one DG-PUSCH configuration, and different CORESET pool indexes respectively associated with the CG-PUSCH configuration and the DG-PUSCH configuration, determines the TRPs respectively associated with the CG-PUSCH configuration and the DG-PUSCH configuration, and then determines an antenna panel of the terminal corresponding to each TRP.

In some embodiments, a PDCCH carrying scheduling DCI is sent to the terminal; an RRC signaling is sent to the terminal; and the PUSCH transmitted simultaneously is received from the terminal by antenna panels corresponding to TRPs associated with one DG-PUSCH configuration and one CG-PUSCH configuration of type one. The PUSCH is sent by the terminal in the case that the terminal determines the DG-PUSCH configuration and a first CORESET pool index associated with the DG-PUSCH configuration based on the scheduling DCI, and determines the CG-PUSCH configuration of the type one and a second CORESET pool index associated with the CG-PUSCH configuration of the type one based on the RRC signaling. The first CORESET pool index is different from the second CORESET pool index.

In embodiments of the disclosure, one CG-PUSCH configuration and one DG-PUSCH configuration determined by the terminal may be one CG-PUSCH configuration of the type one and one DG-PUSCH configuration determined.

The terminal receives the PDCCH carrying the scheduling DCI sent by the network side device, and determines the DG-PUSCH configuration and the first CORESET pool index associated with the DG-PUSCH configuration based on the scheduling DCI. The terminal receives the RRC signaling sent by the network side device, and determines the CG-PUSCH configuration of the type one and the second CORESET pool index associated with the CG-PUSCH configuration of the type one based on the RRC signaling, in which the first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device, and determines the DG-PUSCH configuration and the first CORESET pool index "0" associated with the DG-PUSCH configuration based on the scheduling DCI. The terminal receives the RRC signaling sent by the network side device, and determines the CG-PUSCH configuration of the type one and the second CORESET pool index "1" associated with the CG-PUSCH configuration of the type one based on the RRC signaling. Then, it may be determined that the DG-PUSCH configuration is associated with the TRP1 and the CG-PUSCH configuration of the type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, and the PUSCH may be transmitted by the Panel2 corresponding to the TRP2 based on the CG-PUSCH configuration of the type one, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

In some embodiments, the network side device sends a PDCCH carrying scheduling DCI to the terminal; sends an RRC signaling and a PDCCH carrying activating DC to the terminal, the activating DCI scheduling a second CORESET pool index; and receives a PUSCH transmitted simultaneously from the terminal by antenna panels corresponding to TRPs associated with one DG-PUSCH configuration and one CG-PUSCH configuration of type two. The PUSCH is sent by the terminal in the case that the terminal determines the DG-PUSCH configuration and a first CORESET pool index associated with the DG-PUSCH configuration based on the scheduling DCI, and determines the CG-PUSCH configuration of the type two and a second CORESET pool index associated with the CG-PUSCH configuration of the type two based on the RRC signaling and the activating DCI. The first CORESET pool index is different from the second CORESET pool index.

In embodiments of the disclosure, one CG-PUSCH configuration and one DG-PUSCH configuration determined by the terminal may be one CG-PUSCH configuration of the type two and one DG-PUSCH configuration determined.

The terminal receives the PDCCH carrying the scheduling DCI sent by the network side device; and determines the DG-PUSCH configuration and the first CORESET pool index associated with the DG-PUSCH configuration based on the scheduling DCI. The terminal receives the RRC signaling and the PDCCH carrying the activating DCI sent by the network side device, the activating DCI scheduling the second CORESET pool index; and determines the CG-PUSCH configuration of the type two and the second CORESET pool index associated with the CG-PUSCH configuration of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device; determines the DG-PUSCH configuration and the first CORESET pool index "0" associated with the DG-PUSCH configuration based on the scheduling DCI. The terminal receives the RRC signaling and the activating DCI sent by the network side device, and determines the CG-PUSCH configuration of the type two and the second CORESET pool index "1" associated with the CG-PUSCH configuration of the type two based on the RRC signaling and the activating DCI. Then, it may be determined that the DG-PUSCH configuration is associated with the TRP1 and the CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to the directions of the multiple TRPs of the network side device by the multiple antenna panels of the terminal, realizing the simultaneous coordinated transmission, increasing the reliability and the throughput rate of the transmission, and reducing the transmission delay in the multiple TRPs.

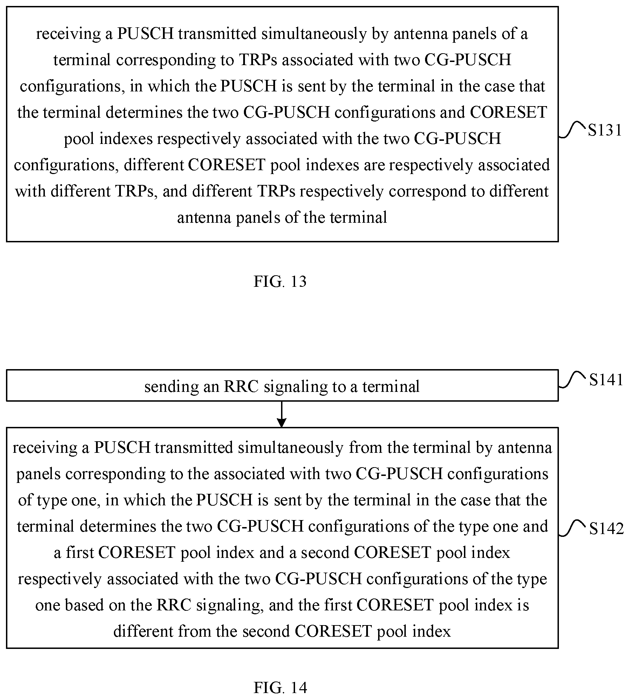

Referring to FIG. 13, FIG. 13 is a flow chart illustrating a method for transmitting a PUSCH according to a still another embodiment of the disclosure.

As illustrated in FIG. 13, the method is performed by a network side device. The method may include, but is not limited to, the following.

At block S131: a PUSCH transmitted simultaneously is received from a terminal by antenna panels corresponding to TRPs associated with two CG-PUSCH configurations, in which the PUSCH is sent by the terminal in the case that the terminal determines the two CG-PUSCH configurations and CORESET pool indexes respectively associated with the two CG-PUSCH configurations. Different CORESET pool indexes are respectively associated with different TRPs, and different TRPs respectively correspond to different antenna panels of the terminal.

In embodiments of the disclosure, the terminal determines the two CG-PUSCH configurations and the CORESET pool index associated with each of the two CG-PUSCH configurations.

The terminal may determine the two CG-PUSCH configurations based on a protocol agreement, an indication from the network side device, or both the protocol agreement and the indication from the network side device.

It may be understood that the terminal determines the two CG-PUSCH configurations and different CORESET pool indexes respectively associated with the two CG-PUSCH configurations. The CORESET pool indexes respectively associated with the two CG-PUSCH configurations are "0" and "1". The associated CORESET pool indexes "0" and "1" represent different TRPs associated respectively. Then, the TRP associated with each CG-PUSCH configuration may be determined.

In embodiments of the disclosure, the terminal determines the two CG-PUSCH configurations and the CORESET pool index associated with each of the two CG-PUSCH configurations, determines different TRPs associated with different CG-PUSCH configurations, and then determines an antenna panel of the terminal corresponding to each TRP.

Based on the above, the network side device determines the PUSCH simultaneously by the antenna panels corresponding to the TRPs associated with the two CG-PUSCH configurations. The PUSCH is sent by the terminal in the case that the terminal determines the two CG-PUSCH configurations and the CORESET pool indexes respectively associated with the two CG-PUSCH configurations. Different CORESET pool indexes are respectively associated with different TRPs, and different TRPs respectively correspond to different panels of the terminal. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Referring to FIG. 14, FIG. 14 is a flow chart illustrating a method for transmitting on a PUSCH according to a still another embodiment of the disclosure.

As illustrated in FIG. 14, the method is performed by a network side device. The method may include, but is not limited to, the following.

At block S141: an RRC signaling is sent to a terminal.

At block S141: a PUSCH transmitted simultaneously is received from the terminal by antenna panels corresponding to TRPs associated with two CG-PUSCH configurations of type one, in which the PUSCH is sent by the terminal in the case that the terminal determines the two CG-PUSCH configurations of the type one and a first CORESET pool index and a second CORESET pool index respectively associated with the two CG-PUSCH configurations of the type one based on the RRC signaling. The first CORESET pool index is different from the second CORESET pool index.

In embodiments of the disclosure, the terminal receives the RRC signaling sent by the network side device, and determines the two CG-PUSCH configurations of the type one, the first CORESET pool index and the second CORESET pool index respectively associated with the two CG-PUSCH configurations of the type one based on the RRC signaling. The first CORESET pool index is different from the second CORESET pool index.

For the CG-PUSCH configuration of the type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling sent by the network side device, and determines the two CG-PUSCH configurations of the type one, the first CORESET pool index "0" associated with a first CG-PUSCH configuration of the type one, and the second CORESET pool index "1" associated with a second CG-PUSCH configuration of the type one based on the RRC signaling. Then, it may be determined that the first CG-PUSCH configuration of the type one is associated with the TRP1 and the second CG-PUSCH configuration of type one is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type one, the PUSCH may be transmitted by the Panel2 corresponding to the TRP2 based on the second CG-PUSCH configuration of the type one, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the network side device sends the RRC signaling to the terminal, and receives the PUSCH transmitted simultaneously from the terminal by the antenna panels corresponding to the TRPs associated with the two CG-PUSCH configurations of the type one. The PUSCH is sent by the terminal in the case that the terminal determines the two CG-PUSCH configurations of the type one and the first CORESET pool index and the second CORESET pool index respectively associated with the two CG-PUSCH configurations of the type one based on the RRC signaling. The first CORESET pool index is different from the second CORESET pool index. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

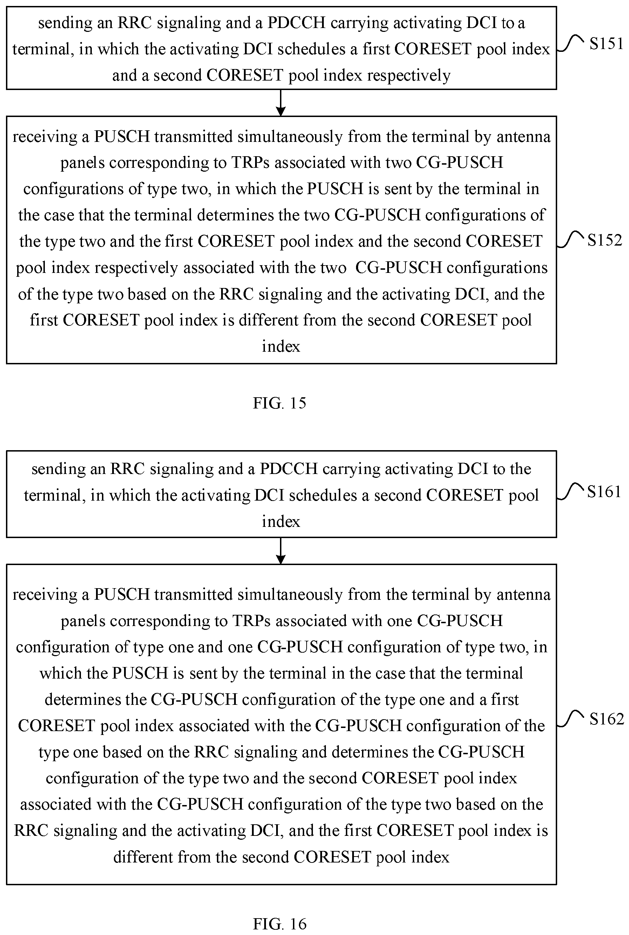

Referring to FIG. 15, FIG. 15 is a flow chart illustrating a method for transmitting on a PUSCH according to a still another embodiment of the disclosure.

As illustrated in FIG. 15, the method is performed by a network side device. The method may include, but is not limited to, the following.

At block S151: an RRC signaling and a PDCCH carrying activating DCI are sent to a terminal, in which the activating DCI schedules a first CORESET pool index and a second CORESET pool index respectively

At block S152: a PUSCH transmitted simultaneously is received from the terminal by antenna panels corresponding to TRPs associated with two CG-PUSCH configurations of type two, in which the PUSCH is sent by the terminal in the case that the terminal determines the two CG-PUSCH configurations of the type two and a first CORESET pool index and a second CORESET pool index respectively associated with the two CG-PUSCH configurations of the type two based on the RRC signaling and the activating DCI. The first CORESET pool index is different from the second CORESET pool index.

In embodiments of the disclosure, the terminal receives the RRC signaling and the PDCCH carrying the activating DCI sent by the network side device, the activating DCI scheduling the first CORESET pool index and the second CORESET pool index respectively; and determines the two CG-PUSCH configurations of the type two and the first CORESET pool index and the second CORESET pool index respectively associated with the two CG-PUSCH configurations of the type two based on the RRC signaling and the activating DCI. The first CORESET pool index is different from the second CORESET pool index.

For the CG-PUSCH configuration of the type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH configuration of the type two by an MAC control signaling sent in the uplink.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the first CORESET pool index and the second CORESET pool index respectively; and determines the two CG-PUSCH configurations of the type two, the first CORESET pool index "0" associated with a first CG-PUSCH configuration of the type two, and the second CORESET pool index "1" associated with a second CG-PUSCH configuration of the type two based on the RRC signaling and the activating DCI. Then, it may be determined that the first CG-PUSCH configuration of the type two is associated with the TRP1 and the second CG-PUSCH configuration of the type two may is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the first CG-PUSCH configuration of the type two, the PUSCH may be transmitted by the Panel2 corresponding to the TRP2 based on the second CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the network side device sends the RRC signaling and the PDCCH carrying the activating DCI to the terminal, the activating DCI scheduling the first CORESET pool index and the second CORESET pool index respectively, and receives the PUSCH transmitted simultaneously from the terminal by the antenna panels corresponding to the TRPs associated with the two CG-PUSCH configurations of the type two. The PUSCH is sent by the terminal in the case that the terminal determines the two CG-PUSCH configurations of the type two and the first CORESET pool index and the second CORESET pool index respectively associated with the two CG-PUSCH configurations of the type two based on the RRC signaling and the activating DCI. The first CORESET pool index is different from the second CORESET pool index. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

Referring to FIG. 16, FIG. 16 is a flow chart illustrating a method for transmitting a PUSCH according to a still another embodiment of the disclosure.

As illustrated in FIG. 16, the method is performed by a network side device. The method may include, but is not limited to, the following.

At block S161: an RRC signaling and a PDCCH carrying activating DCI are sent to a terminal, in which the activating DCI schedules a second CORESET pool index.

At block S162: a PUSCH transmitted simultaneously is received from the terminal by antenna panels corresponding to TRPs associated with one CG-PUSCH configuration of type one and one CG-PUSCH configuration of type two, in which the PUSCH is sent by the terminal in the case that the terminal determines the CG-PUSCH configuration of the type one and a first CORESET pool index associated with the CG-PUSCH configuration of the type one based on the RRC signaling, and determines the CG-PUSCH configuration of the type two and the second CORESET pool index associated with the CG-PUSCH configuration of the type two based on the RRC signaling and the activating DCI. The first CORESET pool index is different from the second CORESET pool index.

In embodiments of the disclosure, the terminal determines one CG-PUSCH configuration of the type one and one CG-PUSCH configuration of the type two.

The terminal receives the RRC signaling and the PDCCH carrying the activating DCI sent by the network side device, the activating DCI scheduling the second CORESET pool index; determines one CG-PUSCH configuration of the type one and the first CORESET pool index associated with the CG-PUSCH configuration of the type one based on the RRC signaling; and determines one CG-PUSCH configuration of the type two and the second CORESET pool index associated with the CG-PUSCH configuration of the type two based on the RRC signaling and the activating DCI. The first CORESET pool index is different from the second CORESET pool index.

For the CG-PUSCH configuration of the type one, an uplink grant, including granted activation, is provided by an RRC signaling of the network side device. The CG-PUSCH configuration takes effect immediately in the case that configuration of the RRC signaling is correctly received from the network side device. Transmission parameters configured by the RRC signaling include a period, a time offset and frequency resources, and a modulation coding method used for the uplink transmission. In the case that the configuration of the RRC signaling of the network side device is received, the terminal starts the transmission of the configured grant PUSCH at a moment determined based on the period and the offset. The offset is used to control a moment at which the terminal is allowed to transmit.

For the CG-PUSCH configuration of the type two, a transmission period is provided by the RRC signaling of the network side device, and the network side device realizes resource activation and configuration of some of the transmission parameters by activating DCI, thus realizing an activation transmission of the CG-PUSCH. After the terminal receives a command of the activating DCI, the terminal performs transmission based on a preconfigured period in the case that data is transmitted in cache, and the terminal does not transmit any data in the case that no data is transmitted in the cache. A moment of PDCCH transmission clarifies an activating time. The terminal confirms activating/de-activating the CG-PUSCH configuration of the type two by a media access control (MAC) control signaling sent in the uplink.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the RRC signaling and the PDCCH carrying the activating DCI sent by the network side device, the activating DCI scheduling the second CORESET pool index; determines one CG-PUSCH configuration of the type one and the first CORESET pool index "0" associated with the CG-PUSCH configuration of the type one based on the RRC signaling; and determines one CG-PUSCH configuration of the type two and the second CORESET pool index "1" associated with the CG-PUSCH configuration of the type two based on the RRC signaling and the activating DCI. Then, it may be determined that the CG-PUSCH configuration of the type one is associated with the TRP1 and the CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the CG-PUSCH configuration of the type one, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the network side device sends the RRC signaling and the PDCCH carrying the activating DCI to the terminal, the activating DCI scheduling the second CORESET pool index; and receives the PUSCH transmitted simultaneously from the terminal by the antenna panels corresponding to the TRPs associated with one CG-PUSCH configuration of the type one and one CG-PUSCH configuration of the type two. The PUSCH is sent by the terminal in the case that the terminal determines the CG-PUSCH configuration of the type one and the first CORESET pool index associated with the CG-PUSCH configuration of the type one based on the RRC signaling, and determines the CG-PUSCH configuration of the type two and the second CORESET pool index associated with the CG-PUSCH configuration of the type two based on the RRC signaling and the activating DCI. The first CORESET pool index is different from the second CORESET pool index. Thus, the PUSCH may be transmitted simultaneously to the directions of the multiple TRPs of the network side device by the multiple antenna panels of the terminal, realizing the simultaneous coordinated transmission, thus increasing the reliability and the throughput rate of the transmission, reducing the transmission delay in the multiple TRPs.

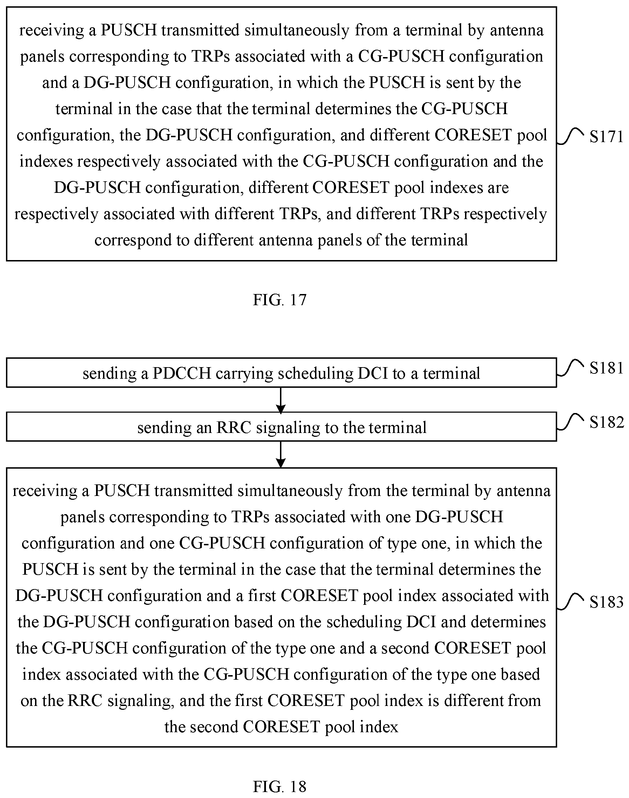

Referring to FIG. 17, FIG. 17 is a flow chart illustrating a method for transmitting on a PUSCH according to a still another embodiment of the disclosure.

As illustrated in FIG. 17, the method is performed by a network side device. The method may include, but is not limited to, the following.

At block S171: a PUSCH transmitted simultaneously is received from a terminal by antenna panels corresponding to TRPs associated with a CG-PUSCH configuration and a DG-PUSCH configuration, in which the PUSCH is sent by the terminal in the case that the terminal determines the CG-PUSCH configuration, the DG-PUSCH configuration, and different CORESET pool indexes respectively associated with the CG-PUSCH configuration and the DG-PUSCH configuration. Different CORESET pool indexes are respectively associated with different TRPs, and different TRPs respectively correspond to different panels of the terminal.

In embodiments of the disclosure, the multiple PUSCH configurations determined by the terminal may be one CG-PUSCH configuration and one DG-PUSCH configuration determined. The CORESET pool indexes respectively associated with different PUSCH configurations determined by the terminal may be: different CORESET pool indexes respectively associated with the CG-PUSCH configuration and the DG-PUSCH configuration determined.

The terminal may determine one CG-PUSCH configuration and one DG-PUSCH configuration based on a protocol agreement, an indication from the network side device, or both the protocol agreement and the indication from the network side device.

It may be understood that the terminal determines one CG-PUSCH configuration and one DG-PUSCH configuration. The CG-PUSCH configuration and the DG-PUSCH configuration are associated with different CORESET pool indexes respectively. The CORESET pool indexes respectively associated with the CG-PUSCH configuration and the DG-PUSCH configuration are "0" and "1". The associated CORESET pool indexes "0" and "1" represent different TRPs associated respectively. Thus, the TRPs associated with the CG-PUSCH configuration and the DG-PUSCH configuration respectively may be determined.

In embodiments of the disclosure, the terminal determines one CG-PUSCH configuration, one DG-PUSCH configuration, and different CORESET pool indexes respectively associated with the CG-PUSCH configuration and the DG-PUSCH, determines the TRPs associated with the CG-PUSCH configuration and the DG-PUSCH configuration respectively, and then determines an antenna panel of the terminal corresponding to each TRP.

Based on the above, the network side device receives the PUSCH transmitted simultaneously from the terminal by the antenna panels corresponding to the TRPs associated with one CG-PUSCH configuration and one DG-PUSCH configuration. The PUSCH is sent by the terminal in the case that the terminal determines the CG-PUSCH configuration, the DG-PUSCH configuration, and different CORESET pool indexes respectively associated with the CG-PUSCH configuration and the DG-PUSCH configuration. Different CORESET pool indexes are respectively associated with different TRPs, and different TRPs respectively correspond to different antenna panels of the terminal. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay under the multiple TRPs.

Referring to FIG. 18, FIG. 18 is a flow chart illustrating a method for transmitting a PUSCH according to a still another embodiment of the disclosure.

As illustrated in FIG. 18, the method is performed by a network side device. The method may include, but is not limited to, the following.

At block S181: a PDCCH carrying scheduling DCI is sent to a terminal.

At block S182: an RRC signaling is sent to the terminal.

At block S183: a PUSCH transmitted simultaneously is received from the terminal by antenna panels corresponding to TRPs associated with one DG-PUSCH configuration and one CG-PUSCH configuration of type one, in which the PUSCH is sent by the terminal in the case that the terminal determines the DG-PUSCH configuration and a first CORESET pool index associated with the DG-PUSCH configuration based on the scheduling DCI, and determining the CG-PUSCH configuration of the type one and a second CORESET pool index associated with the CG-PUSCH configuration of the type one based on the RRC signaling. The first CORESET pool index is different from the second CORESET pool index.

In embodiments of the disclosure, the terminal determines one CG-PUSCH configuration of the type one and one DG-PUSCH configuration.

The terminal receives the PDCCH carrying the scheduling DCI sent by the network side device, and determines the DG-PUSCH configuration and the first CORESET pool index associated with the DG-PUSCH configuration based on the scheduling DCI. The terminal receives the RRC signaling sent by the network side device, and determines the CG-PUSCH configuration of the type one and the second CORESET pool index associated with the CG-PUSCH configuration of the type one based on the RRC signaling. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device, and determines the DG-PUSCH configuration and the first CORESET pool index "0" associated with the DG-PUSCH configuration based on the scheduling DCI. The terminal receives the RRC signaling sent by the network side device, and determines the CG-PUSCH configuration of type one and the second CORESET pool index "1" associated with the CG-PUSCH configuration of the type one based on the RRC signaling, and then determines the TRP1 associated with the DG-PUSCH configuration and the TRP2 associated with the CG-PUSCH configuration of the type one.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type one, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the network side device sends the PDCCH carrying the scheduling DCI to the terminal, sends the RRC signaling to the terminal; and receives the PUSCH transmitted simultaneously from the terminal by the antenna panels corresponding to the TRPs associated with one DG-PUSCH configuration and one CG-PUSCH configuration of the type one, in which the PUSCH is sent by the terminal in the case that the terminal determines the DG-PUSCH configuration and the first CORESET pool index associated with the DG-PUSCH configuration based on the scheduling DCI, and determines the CG-PUSCH configuration of the type one and the second CORESET pool index associated with the CG-PUSCH configuration of the type one based on the RRC signaling. The first CORESET pool index is different from the second CORESET pool index. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

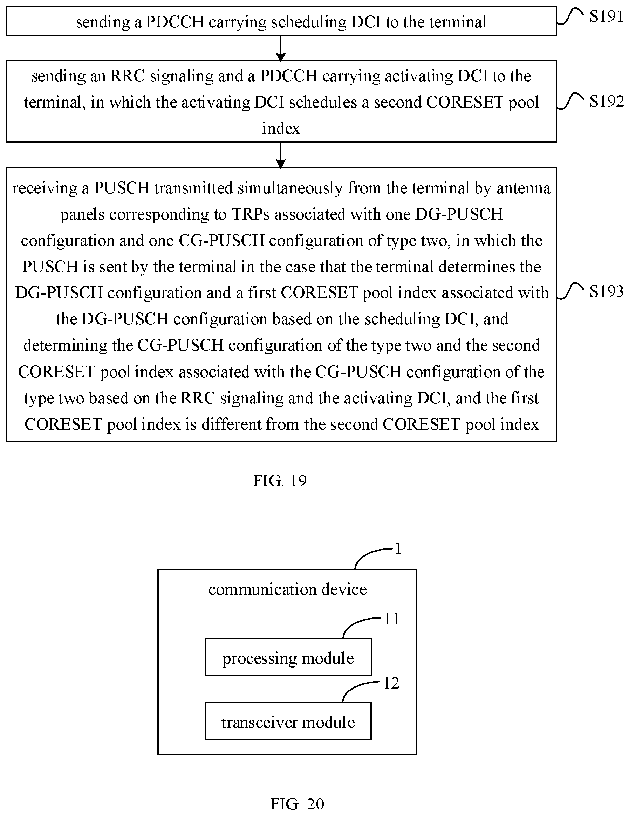

Referring to FIG. 19, FIG. 19 is a flow chart illustrating a method for transmitting on a PUSCH according to a still another embodiment of the disclosure.

As illustrated in FIG. 19, the method is performed by a network side device. The method may include, but is not limited to, the following.

At block S191: a PDCCH carrying scheduling DCI is sent to a terminal.

At block S192: an RRC signaling and a PDCCH carrying activating DCI are sent to the terminal, in which the activating DCI schedules a second CORESET pool index.

At block S193: a PUSCH transmitted simultaneously is received from the terminal by antenna panels corresponding to TRPs associated with one DG-PUSCH configuration and one CG-PUSCH configuration of type two, in which the PUSCH is sent by the terminal in the case that the terminal determines the DG-PUSCH configuration and a first CORESET pool index associated with the DG-PUSCH configuration based on the scheduling DCI, and determines the CG-PUSCH configuration of the type two and a second CORESET pool index associated with the CG-PUSCH configuration of the type two based on the RRC signaling and the activating DCI. The first CORESET pool index is different from the second CORESET pool index.

In embodiments of the disclosure, the terminal determines one CG-PUSCH configuration of the type two and one DG-PUSCH configuration.

The terminal receives the PDCCH carrying the scheduling DCI sent by the network side device; and determines the DG-PUSCH configuration and the first CORESET pool index associated with the DG-PUSCH configuration based on the scheduling DCI. The terminal receives the RRC signaling and the PDCCH carrying the activating DCI sent by the network side device, the activating DCI scheduling the second CORESET pool index; and determines the CG-PUSCH configuration of the type two and the second CORESET pool index associated with the CG-PUSCH configuration of the type two based on the RRC signaling and the activating DCI. The first CORESET pool index is different from the second CORESET pool index.

For example, the first CORESET pool index is "0" and the second CORESET pool index is "1". The first CORESET pool index is different from the second CORESET pool index. The first CORESET pool index and the second CORESET pool index are respectively associated with different TRPs. For example, the first CORESET pool index is associated with TRP1 and the second CORESET pool index is associated with TRP2.

The terminal receives the PDCCH carrying the scheduling DCI sent by the network side device; determines the DG-PUSCH configuration and the first CORESET pool index "0" associated with the DG-PUSCH configuration based on the scheduling DCI. The terminal receives the RRC signaling and the activating DCI sent by the network side device, and determines the CG-PUSCH configuration of the type two, and the second CORESET pool index "1" associated with the CG-PUSCH configuration of the type two based on the RRC signaling and the activating DCI. Then it may be determined that the DG-PUSCH configuration is associated with the TRP1, and the CG-PUSCH configuration of the type two is associated with the TRP2.

It is assumed that the TRP1 corresponds to Panel1 of the terminal and the TRP2 corresponds to Panel2 of the terminal, the PUSCH may be transmitted by the Panel1 corresponding to the TRP1 based on the DG-PUSCH configuration, the PUSCH may be transmitted by the Panel2 corresponding to the TRP2 based on the CG-PUSCH configuration of the type two, and the PUSCH may be transmitted simultaneously. Thus, the PUSCH may be transmitted simultaneously to directions of multiple TRPs of the network side device by multiple antenna panels of the terminal, thus realizing the simultaneous coordinated transmission, increasing the reliability and the throughput rate of the transmission, and reducing the transmission delay in the multiple TRPs.

Based on the above, the network side device sends the PDCCH carrying the scheduling DCI to the terminal; sends the RRC signaling and the PDCCH carrying the activating DCI to the terminal, the activating DCI scheduling the second CORESET pool index; and receives the PUSCH transmitted simultaneously from the terminal by the antenna panels corresponding to the TRPs associated with one DG-PUSCH configuration and one CG-PUSCH configuration of the type two, in which the PUSCH is sent by the terminal in the case that the terminal determines the DG-PUSCH configuration and the first CORESET pool index associated with the DG-PUSCH configuration based on the scheduling DCI, and determines the CG-PUSCH configuration of the type two and the second CORESET pool index associated with the CG-PUSCH configuration of the type two based on the RRC signaling and the activating DCI. The first CORESET pool index is different from the second CORESET pool index. Thus, the PUSCH may be transmitted simultaneously to the directions of the multiple TRPs of the network side device by the multiple antenna panels of the terminal, thus realizing the simultaneous coordinated transmission, increasing the reliability and the throughput rate of the transmission, and reducing the transmission delay in the multiple TRPs.

In the above embodiments according to the disclosure, description is made to the method according to embodiments of the disclosure from the perspectives of the network side device and the terminal respectively. In order to realize each of the functions in the method according to the above embodiments of the disclosure, the terminal and the network side device may include a hardware structure and a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Referring to FIG. 20, FIG. 20 is a block diagram illustrating a communication device 1 according to an embodiment of the disclosure. The communication device 1 illustrated in FIG. 20 may include a transceiver module 11 and a processing module 12. The transceiver module may include a sending unit and/or a receiving unit. The sending unit is configured to realize a sending function, and the receiving unit is configured to realize a receiving function. The transceiver module may realize the sending function and/or the receiving function.

The communication device 1 may be a terminal, an apparatus in the terminal, or an apparatus that may be used in matching to the terminal. Alternatively, the communication device 1 may be a network side device, an apparatus in the network side device, or an apparatus that may be used in matching to the network side device.

The communication device 1 may be the terminal.

The communication device includes: the transceiver module 11 and the processing module 12.

The processing module 12 is configured to determine multiple PUSCH configurations including a CG-PUSCH and configured for simultaneous uplink transmission on multiple antenna panels, and CORESET pool indexes respectively associated with different PUSCH configurations, in which different CORESET pool indexes are respectively associated with different TRPs, and different TRPs respectively correspond to different antenna panels of the terminal.

The transceiver module 11 is configured to transmit the PUSCH simultaneously by the antenna panels corresponding to the TRPs associated with the plurality of PUSCH configurations.

In some embodiments, the processing module 12 is further configured to determine two CG-PUSCH configurations and a CORESET pool index associated with each of the two CG-PUSCH configurations.

In some embodiments, the transceiver module 11 is further configured to receive a RRC signaling sent by a network side device.

The processing module 12 is further configured to determine two CG-PUSCH configurations of type one and a first CORESET pool index and a second CORESET pool index respectively associated with the two CG-PUSCH configurations of the type one based on the RRC signaling, in which the first CORESET pool index is different from the second CORESET pool index.

In some embodiments, the transceiver modulel1 is further configured to receive an RRC signaling and a PDCCH carrying activating DCI sent by a network side device, in which the activating DCI is used to schedule a first CORESET pool index and a second CORESET pool index respectively.

The processing module 12 is further configured to determine two CG-PUSCH configurations of type two and the first CORESET pool index and the second CORESET pool index respectively associated with the two CG-PUSCH configurations of the type two based on the RRC signaling and the activating DCI, in which the first CORESET pool index is different from the second CORESET pool index.

In some embodiments, the transceiver module 11 is further configured to receive an RRC signaling and a PDCCH carrying activating DCI sent by a network side device, in which the activating DCI schedules a second CORESET pool index.

The processing module 12 is further configured to determine one CG-PUSCH configuration of type one and a first CORESET pool index associated with the CG-PUSCH configuration of the type one based on the RRC signaling.

The processing module 12 is further configured to determine one CG-PUSCH configuration of type two and the second CORESET pool index associated with the CG-PUSCH configuration of the type two based on the RRC signaling and the activating DCI, in which the first CORESET pool index is different from the second CORESET pool index.

In some embodiments, the processing module 12 is further configured to determine one CG-PUSCH configuration, one DG-PUSCH configuration, and different CORESET pool indexes respectively associated with the CG-PUSCH configuration and the DG-PUSCH configuration.

In some embodiments, the transceiver module 11 is further configured to receive a PDCCH carrying scheduling DCI sent by a network side device.

The processing module 12 is further configured to determine the DG-PUSCH configuration and a first CORESET pool index associated with the DG-PUSCH configuration based on the scheduling DCI.

The transceiver module 11 is further configured to receive an RRC signaling sent by the network side device.

The processing module 12 is further configured to determine a CG-PUSCH configuration of type one and a second CORESET pool index associated with the CG-PUSCH configuration of the type one based on the RRC signaling, in which the first CORESET pool index is different from the second CORESET pool index.

In some embodiments, the transceiver module 11 is further configured to receive a PDCCH carrying scheduling DCI sent by a network side device.

The processing module 12 is further configured to determine the DG-PUSCH configuration and a first CORESET pool index associated with the DG-PUSCH configuration based on the scheduling DCI.

The transceiver module 11 is further configured to receive an RRC signaling and a PDCCH carrying activating DCI sent by the network side device, in which the activating DCI schedules a second CORESET pool index.

The processing module 12 is further configured to determine a CG-PUSCH configuration of type two and a second CORESET pool index associated with the CG-PUSCH configuration of the type two based on the RRC signaling and the activating DCI, in which the first CORESET pool index is different from the second CORESET pool index.

The communication device 1 may be the network side device.

The communication device includes: the transceiver module 11.

The transceiver module 11 is configured to receive a PUSCH transmitted simultaneously from a terminal by antenna panels corresponding to TRPs associated with multiple PUSCH configurations, in which the PUSCH is sent by the terminal in the case that the terminal determines the multiple PUSCH configurations including a CG-PUSCH and configured for simultaneous uplink transmission on multiple antenna panels, and CORESET pool indexes respectively associated with the multiple PUSCH configurations. Different CORESET pool indexes are respectively associated with different TRPs, and different TRPs respectively correspond to different antenna panels of the terminal.

In some embodiments, the multiple PUSCH configurations includes two CG-PUSCH configurations, and the CORESET pool indexes respectively associated with different PUSCH configurations include a CORESET pool index associated with each of the two CG-PUSCH configurations.

In some embodiments, the transceiver module 11 is further configured to send an RRC signaling to the terminal.

The transceiver module 11 is further configured to receive the PUSCH transmitted simultaneously from the terminal by antenna panels corresponding to the TRPs associated with two CG-PUSCH configurations of type one, in which the PUSCH is sent by the terminal in the case that the terminal determines the two CG-PUSCH configurations of the type one and a first CORESET pool index and a second CORESET pool index respectively associated with the two CG-PUSCH configurations of the type one based on the RRC signaling. The first CORESET pool index is different from the second CORESET pool index.

In some embodiments, the transceiver module 11 is further configured to send an RRC signaling and a PDCCH carrying activating DCI to the terminal, in which the activating DCI schedules a first CORESET pool index and a second CORESET pool index respectively.

The transceiver module 11 is further configured to receive a PUSCH transmitted simultaneously from the terminal by antenna panels corresponding to TRPs associated with two CG-PUSCH configurations of type two, in which the PUSCH is sent by the terminal in the case that the terminal determines the two CG-PUSCH configurations of the terminal type two and a first CORESET pool index and a second CORESET pool index respectively associated with the two CG-PUSCH configurations of the type two based on the RRC signaling and the activating DCI. The first CORESET pool index is different from the second CORESET pool index.

In some embodiments, the transceiver module 11 is further configured to send an RRC signaling and a PDCCH carrying activating DCI to the terminal, in which the activating DCI schedules a second CORESET pool index.

The transceiver module 11 is further configured to receive a PUSCH transmitted simultaneously from the terminal by antenna panels corresponding to TRPs associated with one CG-PUSCH configuration of type one and one CG-PUSCH configuration of type two, in which the PUSCH is sent by the terminal in the case that the terminal determines the CG-PUSCH configuration of the type one and a first CORESET pool index associated with the CG-PUSCH configuration of the type one based on the RRC signaling, and determines the CG-PUSCH configuration of the type two and the second CORESET pool index associated with the CG-PUSCH configuration of the type two based on the RRC signaling and the activating DCI, and the first CORESET pool index is different from the second CORESET pool index.

In some embodiments, multiple PUSCH configurations include one CG-PUSCH configuration and one DG-PUSCH configuration, and the CORESET pool indexes respectively associated with different PUSCH configurations includes different CORESET pool indexes respectively associated with the CG-PUSCH configuration and the DG-PUSCH configuration.

In some embodiments, the transceiver module 11 is further configured to send a PDCCH carrying scheduling DCI to the terminal.

The transceiver module 11 is further configured to send an RRC signaling to the terminal.

The transceiver module 11 is further configured to receive a PUSCH transmitted simultaneously from the terminal by antenna panels corresponding to the TRPs associated with one DG-PUSCH configuration and one CG-PUSCH configuration of type one, in which the PUSCH is sent by the terminal in the case that the terminal determines the DG-PUSCH configuration and a first CORESET pool index associated with the DG-PUSCH configuration based on the scheduling DCI and determining the CG-PUSCH configuration of the type one and a second CORESET pool index associated with the CG-PUSCH configuration of the type one based on the RRC signaling. The first CORESET pool index is different from the second CORESET pool index.

In some embodiments, the transceiver module 11 is further configured to send a PDCCH carrying scheduling DCI to the terminal.

The transceiver module 11 is further configured to send an RRC signaling and a PDCCH carrying activating DCI to the terminal, in which the activating DCI schedules a second CORESET pool index.

The transceiver module 11 is further configured to receive a PUSCH transmitted simultaneously from the terminal by antenna panels corresponding to the TRPs associated with one DG-PUSCH configuration and one CG-PUSCH configuration of type two, in which the PUSCH is sent by the terminal in the case that the terminal determines the DG-PUSCH configuration and a first CORESET pool index associated with the DG-PUSCH configuration based on the scheduling DCI, and determines the CG-PUSCH configuration of the type two and a second CORESET pool index associated with the CG-PUSCH configuration of the type two based on the RRC signaling and the activating DCI. The first CORESET pool index is different from the second CORESET pool index.

The communication device 1 in the above embodiments, the detailed way in which each module performs an operation has been described in detail in the embodiments related to the method, which is not described in herein.

The communication device 1 in the above embodiments of the disclosure achieves the same or similar beneficial effects as the method for transmitting a PUSCH provided in some of the above embodiments, which is not described in herein.

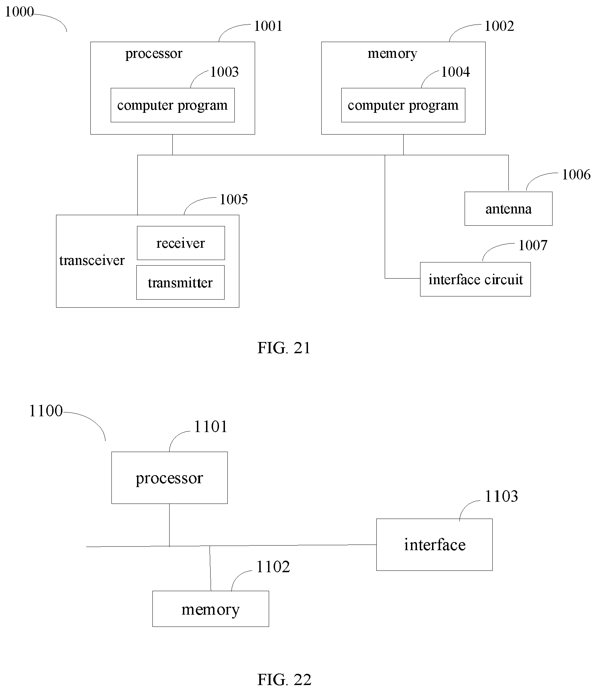

Referring to FIG. 21, FIG. 21 is a block diagram illustrating a communication device 1000 according to another embodiment of the disclosure. The communication device 1000 may be a network side device, a terminal, or a chip, a chip system or a processor that supports the network side device to realize the above-described methods, or a chip, a chip system or a processor that supports the terminal to realize the above-described methods. The communication device 1000 may be configured to realize the methods described in the above method embodiments, and for details, please refer to the descriptions of the above-described method embodiments.

The communication device 1000 may include one or more processors 1001. The processor 1001 may be a general purpose processor or a dedicated processor, such as, a baseband processor or a central processor. The baseband processor is configured to process a communication protocol and communication data. The central processor is configured to control the communication device (e.g., a network side device, a baseband chip, a terminal, a terminal chip, a central unit (CU) or a distributed unit (DU)), to execute a computer program, and to process data of the computer program.

Alternatively, the communication device 1000 may include one or more memories 1002 on which a computer program 1004 may be stored. The processor 1001 executes the computer program 1004 to cause the communication device 1000 to perform the methods described in the above method embodiments. Alternatively, data may also be stored in the memory 1002. The communication device 1000 and the memory 1002 may be provided separately or may be integrated together.

Alternatively, the communication device 1000 may also include a transceiver 1005 and an antenna 1006. The transceiver 1005 may be referred to as a transceiver unit, a transceiver machine, or a transceiver circuit, for realizing a receiving and sending function. The transceiver 1005 may include a receiver and a transmitter. The receiver may be referred to as a receiver machine or a receiving circuit, for realizing the receiving function. The transmitter may be referred to as a sender machine or sending circuit, for realizing the sending function.

Alternatively, the communication device 1000 may also include one or more interface circuits 1007. The interface circuits 1007 are configured to receive code instructions and transmit the code instructions to the processor 1001. The processor 1001 runs the code instructions to cause the communication device 1000 to perform the method described in the method embodiments.

The communication device 1000 is a terminal. The processor 1001 is configured to execute the actions at block S41 in FIG. 4, the actions at block S51 in FIG. 5, the actions at block S62 in FIG. 6, the actions at block S72 in FIG. 7, the actions at block S82 and block S83 in FIG. 8, the actions at block S91 in FIG. 9, the actions at block S102 and block S104 in FIG. 10, the actions at block S112 and block S114 in FIG. 11. The transceiver 1005 is configured to execute the actions at block S42 in FIG. 4, the actions at block S52 in FIG. 5, the actions at block S61 and block S63 in FIG. 6, the actions at block S71 and block S73 in FIG. 7, the actions at block S81 and block S84 in FIG. 8, the actions at block S92 in FIG. 9, the actions at block S101, block S103 and block S105 in FIG. 10, the actions at block S111, block S113 and block S115 in FIG. 11.

The communication device 1000 is the network side device. The transceiver 1005 is configured to execute the actions at block S121 in FIG. 12, the actions at block S131 in FIG. 13, the actions at block S142 and block S143 in FIG. 14, the actions at block S152 and block S153 in FIG. 15, the actions at block S162 and block S162 in FIG. 16, the actions at block S171 in FIG. 17, the actions at block S182 to block S183 in FIG. 18, the actions at block S192 to block S193 in FIG. 19.

In an implementation, the processor 1001 may include a transceiver for realizing the receiving and sending function. For example, the transceiver may be a transceiver circuit, an interface, or an interface circuit. The transceiver circuit, the interface, or the interface circuit for realizing the receiving and sending function may be separated, or may be integrated together. The transceiver circuit, the interface, or the interface circuit described above may be configured for reading and writing code/data, or may be configured for signal sending or delivery.

In an implementation, the processor 1001 may store the computer program 1003. The computer program 1003 is run on the processor 1001 to cause the communication device 1000 to execute the methods described in the above method embodiments. The computer program 1003 may be solidified in the processor 1001, in which case the processor 1001 may be realized by hardware.

In an implementation, the communication device 1000 may include a circuit. The circuit may realize the sending, receiving or communicating function in the above method embodiments. The processor and the transceiver described in the disclosure may be realized in an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the terminal, but a scope of the communication device described in the disclosure is not limited thereto, and a structure of the communication device may not be limited by FIG. 21. The communication device may be a stand-alone device or may be part of a larger device. For example, the communication device may be:
(1) a stand-alone IC, a chip, a chip system or a subsystem;
(2) a collection of ICs including one or more ICs, where alternatively, the collection of ICs may also include a storage component for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network side device, a cloud device, an artificial intelligence device, and the like; and
(6) others.

For the case where the communication device may be the chip or the chip system, please refer to FIG. 22, which illustrates the block diagram of the chip.

The chip 1100 includes a processor 1101 and an interface 1103. There may be one or more processors 1101, and there may be multiple interfaces 1103.

The case where the chip is configured to realize the functionality of the network side device in embodiments of the disclosure is described below.

The interface 1103 is configured to receive code instructions and send the code instructions to the processor.

The processor 1101 is configured to run the code instructions to execute a method for transmitting the PUSCH as described in some embodiments above.

The case where the chip is configured to realize the functionality of the terminal in embodiments of the disclosure is described below.

The interface 1103 is configured to receive code instructions and send the code instructions to the processor.

The processor 1101 is configured to run the code instructions to execute a method for transmitting the PUSCH as described in some embodiments above.

Alternatively, the chip further includes a memory 1102 configured to store necessary computer programs and data.

It should be understood by the skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. The skilled in the art may use various methods to realize the described function for each particular application, but such implementation should not be construed as being beyond the scope of protection of embodiments of the disclosure.

Embodiments of the disclosure also provide a system for transmitting a PUSCH. The system includes the communication device as the terminal and the communication device as the network side device in the embodiment illustrated FIG. 20; or, the system includes the communication device as the terminal and the communication device as the network side device in the embodiment illustrated in FIG. 21.

The disclosure also provides a readable storage medium for storing instructions. When the instructions are executed by a computer, the function of any of the method embodiments described above is realized.

The disclosure also provides a computer program product. When the computer program product is executed by a computer, the function of any of the method embodiments described above is realized.

The above embodiments may be realized in whole or in part by software, hardware, firmware, or any combination of both. When implemented using the software, the above embodiments may be realized, in whole or in part, in the form of the computer program product. The computer program product includes one or more computer programs. When the computer program is loaded and executed on the computer, all or part of processes or functions described in embodiments of the disclosure is realized. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

The skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure may be configured or may be predefined. The values of information in the tables are merely examples and may be configured to other values, which are not limited in the disclosure. In configuring the correspondence between the information and the parameters, there does not require that all the correspondences illustrated in the tables must be configured. For example, the above tables may be adjusted appropriately, such as splitting, merging, and the like. The names of the parameters illustrated in the headings of the above tables may be other names that are understood by the communication device, and the values or representations of the parameters may be other values or expressions that are understood by the communication device. Each of the above tables may also be realized with other data structures, such as, arrays, queues, containers, stacks, linear tables, pointers, chained lists, trees, graphs, structures, classes, heaps, and hash tables.

The term "pre-definition" in the application may be understood as definition, pre-definition, storage, pre-storage, pre-negotiation, pre-configuration, curing, or pre-firing.

Those skilled in the art may know that the units and algorithmic steps of the various examples described in combination with the embodiments disclosed herein are capable of being realized in the form of the electronic hardware, or a combination of the computer software and the electronic hardware. Whether these functions are executed in the hardware or software way depends on the particular application and design constraints of the technical solution. The skilled in the art may use different ways to implement the described functions for each particular application, but such implementations should not be considered as beyond the scope of the disclosure.

It is clearly understood by those skilled in the field that, for the convenience and brevity of description, detailed work processes of the systems, apparatuses, and units described above may be referred to the corresponding processes in the above method embodiments, which are not repeated here.

The above is only detailed implementations of the disclosure, but the scope of protection of the disclosure is not limited thereto. The skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for transmitting a physical uplink shared channel (PUSCH), performed by a terminal, comprising:
determining a plurality of PUSCH configurations comprising a configured grant-PUSCH (CG-PUSCH) and configured for simultaneous uplink transmission on a plurality of antenna panels, and control resource set (CORESET) pool indexes respectively associated with different PUSCH configurations, wherein different CORESET pool indexes are respectively associated with different transmission reception points (TRPs), and different TRPs respectively correspond to different antenna panels of the terminal; and
transmitting the PUSCH simultaneously by the antenna panels corresponding to the TRPs associated with the plurality of PUSCH configurations.

2. The method of claim 1, wherein determining the plurality of PUSCH configurations comprising the CG-PUSCH and configured for simultaneous uplink transmission on the plurality of antenna panels and the CORESET pool indexes respectively associated with different PUSCH configurations comprises:
determining two CG-PUSCH configurations and a CORESET pool index associated with each of the two CG-PUSCH configurations.

3. The method of claim 2, wherein determining the two CG-PUSCH configurations and the CORESET pool index associated with each of the two CG-PUSCH configurations comprises:
receiving a radio resource control (RRC) signaling sent by a network side device; and
determining two CG-PUSCH configurations of type one and a first CORESET pool index and a second CORESET pool index respectively associated with the two CG-PUSCH configurations of the type one based on the RRC signaling, wherein the first CORESET pool index is different from the second CORESET pool index.

4. The method of claim 2, wherein determining the two CG-PUSCH configurations and the CORESET pool index associated with each of the two CG-PUSCH configurations comprises:
receiving an RRC signaling and a physical downlink control channel (PDCCH) carrying activating downlink control information (DCI) sent by a network side device, wherein the activating DCI schedules a first CORESET pool index and a second CORESET pool index respectively; and
determining two CG-PUSCH configurations of type two and the first CORESET pool index and the second CORESET pool index respectively associated with the two CG-PUSCH configurations of the type two based on the RRC signaling and the activating DCI, wherein the first CORESET pool index is different from the second CORESET pool index.

5. The method of claim 2, wherein determining the two CG-PUSCH configurations and the CORESET pool index associated with each of the two CG-PUSCH configurations comprises:
receiving an RRC signaling and a PDCCH carrying activating DCI sent by a network side device, wherein the activating DCI is used to schedule a second CORESET pool index;
determining one CG-PUSCH configuration of type one and a first CORESET pool index associated with the CG-PUSCH configuration of the type one based on the RRC signaling; and
determining one CG-PUSCH configuration of type two and the second CORESET pool index associated with the CG-PUSCH configuration of the type two based on the RRC signaling and the activating DCI, wherein the first CORESET pool index is different from the second CORESET pool index.

6. The method of claim 1, wherein determining the plurality of PUSCH configurations comprising the CG-PUSCH and configured for simultaneous uplink transmission on the plurality of antenna panels and the CORESET pool indexes respectively associated with different PUSCH configurations comprises:
determining one CG-PUSCH configuration, one dynamic grant-PUSCH (DG-PUSCH) configuration, and different CORESET pool indexes respectively associated with the CG-PUSCH configuration and the DG-PUSCH configuration.

7. The method of claim 6, wherein determining the CG-PUSCH configuration, the DG-PUSCH configuration, and different CORESET pool indexes respectively associated with the CG-PUSCH configuration and the DG-PUSCH configuration comprises:
receiving a PDCCH carrying scheduling DCI sent by a network side device;
determining the DG-PUSCH configuration and a first CORESET pool index associated with the DG-PUSCH configuration based on the scheduling DCI;
receiving an RRC signaling sent by the network side device; and
determining a CG-PUSCH configuration of type one and a second CORESET pool index associated with the CG-PUSCH configuration of the type one based on the RRC signaling, wherein the first CORESET pool index is different from the second CORESET pool index.

8. The method of claim 6, wherein determining the CG-PUSCH configuration, the DG-PUSCH configuration, and different CORESET pool indexes respectively associated with the CG-PUSCH configuration and the DG-PUSCH configuration comprises:
receiving a PDCCH carrying scheduling DCI sent by a network side device;
determining the DG-PUSCH configuration and a first CORESET pool index associated with the DG-PUSCH configuration based on the scheduling DCI;
receiving an RRC signaling and a PDCCH carrying activating DCI sent by the network side device, wherein the activating DCI schedules a second CORESET pool index; and
determining a CG-PUSCH configuration of type two and a second CORESET pool index associated with the CG-PUSCH configuration of the type two based on the RRC signaling and the activating DCI, wherein the first CORESET pool index is different from the second CORESET pool index.

9. A method for transmitting a physical uplink shared channel (PUSCH), performed by a network side device, comprising:
receiving a PUSCH transmitted simultaneously from a terminal by antenna panels corresponding to transmission reception points (TRPs) associated with a plurality of PUSCH configurations, wherein the PUSCH is sent by the terminal in the case that the terminal determines the plurality of PUSCH configurations comprising a configured grant-PUSCH (CG-PUSCH) and configured for simultaneous uplink transmission on a plurality of antenna panels, and control resource set (CORESET) pool indexes respectively associated with different PUSCH configurations, different CORESET pool indexes are respectively associated with different TRPs, and different TRPs respectively correspond to different antenna panels of the terminal.

10. The method of claim 9, wherein the plurality of PUSCH configurations comprises two CG-PUSCH configurations, and the CORESET pool indexes respectively associated with different PUSCH configurations comprise a CORESET pool index associated with each of the two CG-PUSCH configurations.

11. The method of claim 10, further comprising:
sending a radio resource control (RRC) signaling to the terminal; and
receiving the PUSCH transmitted simultaneously from the terminal by antenna panels corresponding to TRPs associated with two CG-PUSCH configurations of type one, wherein the PUSCH is sent by the terminal in the case that the terminal determines the two CG-PUSCH configurations of the type one and a first CORESET pool index and a second CORESET pool index respectively associated with the two CG-PUSCH configurations of the type one based on the RRC signaling, the first CORESET pool index is different from the second CORESET pool index.

12. The method of claim 10, further comprising:
sending an RRC signaling and a physical downlink control channel (PDCCH) carrying activating downlink control information (DCI) to the terminal, wherein the activating DCI schedules a first CORESET pool index and a second CORESET pool index respectively; and
receiving the PUSCH transmitted simultaneously from the terminal by antenna panels corresponding to TRPs associated with two CG-PUSCH configurations of type two, wherein the PUSCH is sent by the terminal in the case that the terminal determines the two CG-PUSCH configurations of the type two and a first CORESET pool index and a second CORESET pool index respectively associated with the two CG-PUSCH configurations of the type two based on the RRC signaling and the activating DCI, the first CORESET pool index is different from the second CORESET pool index.

13. The method of claim 10, further comprising:
sending an RRC signaling and a PDCCH carrying activating DCI to the terminal, wherein the activating DCI schedules a second CORESET pool index; and
receiving the PUSCH transmitted simultaneously from the terminal by antenna panels corresponding to TRPs associated with one CG-PUSCH configuration of type one and one CG-PUSCH configuration of type two, wherein the PUSCH is sent by the terminal in the case that the terminal determines the CG-PUSCH configuration of the type one and a first CORESET pool index associated with the CG-PUSCH configuration of the type one based on the RRC signaling, and determines the CG-PUSCH configuration of the type two and a second CORESET pool index associated with the CG-PUSCH configuration of the type two based on the RRC signaling and the activating DCI, the first CORESET pool index is different from the second CORESET pool index.

14. The method of claim 9, wherein the plurality of PUSCH configurations comprise one CG-PUSCH configuration and one dynamic grant-PUSCH (DG-PUSCH) configuration, and the CORESET pool indexes respectively associated with different PUSCH configurations comprise different CORESET pool indexes respectively associated with the CG-PUSCH configuration and the DG-PUSCH configuration.

15. The method of claim 14, further comprising:
sending a PDCCH carrying scheduling DCI to the terminal;
sending an RRC signaling to the terminal; and
receiving the PUSCH transmitted simultaneously from the terminal by antenna panels corresponding to TRPs associated with the DG-PUSCH configuration and one CG-PUSCH configuration of type one, wherein the PUSCH is sent by the terminal in the case that the terminal determines the DG-PUSCH configuration and a first CORESET pool index associated with the DG-PUSCH configuration based on the scheduling DCI, and determines the CG-PUSCH configuration of the type one and a second CORESET pool index associated with the CG-PUSCH configuration of the type one based on the RRC signaling, the first CORESET pool index is different from the second CORESET pool index.

16. The method of claim 14, further comprising:
sending a PDCCH carrying scheduling DCI to the terminal;
sending an RRC signaling and a PDCCH carrying activating DCI to the terminal, wherein the activating DCI schedules a second CORESET pool index; and
receiving the PUSCH transmitted simultaneously from the terminal by antenna panels corresponding to TRPs associated with the DG-PUSCH configuration and one CG-PUSCH configuration of type two, wherein the PUSCH is sent by the terminal in the case that the terminal determines the DG-PUSCH configuration and a first CORESET pool index associated with the DG-PUSCH configuration based on the scheduling DCI, and determines the CG-PUSCH configuration of the type two and a second CORESET pool index associated with the CG-PUSCH configuration of the type two based on the RRC signaling and the activating DCI, the first CORESET pool index is different from the second CORESET pool index.

17. A communication device, comprising:
a processing module, configured to determine a plurality of PUSCH configurations comprising a configured grant-PUSCH (CG-PUSCH) and configured for simultaneous uplink transmission on a plurality of antenna panels, and control resource set (CORESET) pool indexes respectively associated with different PUSCH configurations, wherein different CORESET pool indexes are respectively associated with different transmission reception points (TRPs), and different TRPs respectively correspond to different antenna panels of the terminal; and
a transceiver module, configured to transmit the PUSCH simultaneously by the antenna panels corresponding to the TRPs associated with the plurality of PUSCH configurations.

18. A communication device, comprising:
a transceiver module, configured to receive a PUSCH transmitted simultaneously from a terminal by antenna panels corresponding to transmission reception points (TRPs) associated with the plurality of PUSCH configurations, wherein the PUSCH is sent by the terminal in the case that the terminal determines the plurality of PUSCH configurations comprising a configured grant-PUSCH (CG-PUSCH) and configured for simultaneous uplink transmission on a plurality of antenna panels, and control resource set (CORESET) pool indexes respectively associated with different PUSCH configurations, different CORESET pool indexes are respectively associated with different TRPs, and different TRPs respectively correspond to different panels of the terminal.

19. A communication device, comprising a processor and a memory for storing a computer program, wherein the processor is configured to execute the computer program, to enable the communication device to realize the method of any one of claims 1 to 8 or the method of any one of claims 9 to 16.

20. A communication device, comprising a processor and an interface circuit;
the interface circuit being configured to receive code instructions and send the code instructions to the processor; and
the processor being configured to run the code instructions to realize the method of any one of claims 1 to 8 or the method of any one of claims 9 to 16.

21. A computer-readable storage medium for storing instructions, wherein the method of any one of claims 1 to 8 or the method of any one of claims 9 to 16 is implemented when the instructions are executed.
